# EUROPEAN PATENT SPECIFICATION

(11) **EP 4 125 050 B1**
(45) Date of publication and mention of the grant of the patent: **25.11.2026**
(21) Application number: 22187763.2
(22) Date of filing: 29.07.2022
(51) Int. Cl.: G06F 18/24, G06V 10/764

(54) **UTILIZING PREDICTION THRESHOLDS TO FACILITATE SPECTROSCOPIC CLASSIFICATION**
VERWENDUNG VON VORHERSAGESCHWELLENWERTEN ZUR ERLEICHTERUNG DER SPEKTROSKOPISCHEN KLASSIFIKATION
UTILISATION DE SEUILS DE PRÉDICTION POUR FACILITER LA CLASSIFICATION SPECTROSCOPIQUE

(30) Priority: 30.07.2021 US 202117444073
(43) Date of publication of application: 01.02.2023
(73) Proprietor: Viavi Solutions Inc., Chandler, AZ 85286 (US)
(72) Inventor: HSIUNG, Chang Meng, Redwood City, 94065 (US); SUN, Lan, Santa Rosa, 95404 (US)
(74) Representative: Murgitroyd & Company

(56) References cited:
- EP-A1- 3 517 931
- EP-A1- 3 518 147
- LAN SUN ET AL: "Pharmaceutical Raw Material Identification Using Miniature Near-Infrared (MicroNIR) Spectroscopy and Supervised Pattern Recognition Using Support Vector Machine", APPLIED SPECTROSCOPY., vol. 70, no. 5, 30 March 2016 (2016-03-30), US, pages 816 - 825, XP055429869, ISSN: 0003-7028, DOI: 10.1177/0003702816638281
- TAO BAN ET AL: "Implementing Multi-class Classifiers by One-class Classification Methods", INTERNATIONAL JOINT CONFERENCE ON NEURAL NETWORKS, 2006. IJCNN '06, PISCATAWAY, NJ : IEEE OPERATIONS CENTER, PISCATAWAY, NJ, USA, 16 July 2006 (2006-07-16), pages 327 - 332, XP010948000, ISBN: 978-0-7803-9490-2

## Description

### BACKGROUND

Raw material identification may be utilized for quality control of material products (e.g., pharmaceutical products, medical products, or food products, among other examples). For example, raw material identification may be performed on a material to determine whether component ingredients of the material correspond to a packaging label associated with the material. Spectroscopy may facilitate non-destructive raw material identification with reduced preparation and data acquisition time relative to other analytical techniques. EP3517931A1 and EP3518147A1 disclose the use of raw material identification (RMID), a spectroscopy technique, to identify components (e.g., ingredients) of a particular sample for identification or verification (e.g. for quality-control of pharmaceutical products).

### SUMMARY

Some implementations described herein relate to a method according to claim 1, The method may include obtaining, by a device, a spectroscopic measurement associated with a sample. The method may include generating, by the device and based on the spectroscopic measurement and a global classification model, a local classification model that includes a plurality of classes. The method may include identifying, by the device and based on the spectroscopic measurement, a particular class of the plurality of classes of the local classification model. The method may include identifying, by the device, a prediction threshold associated with the particular class. The method may include classifying, by the device and based on the particular class and the prediction threshold, the spectroscopic measurement. The method may include providing, by the device and based on classifying the spectroscopic measurement, information indicating whether the sample belongs to the particular class.

Identifying the particular class may comprise: determining a set of decision values associated with each class of the plurality of classes of the local classification model; determining that a threshold amount of decision values of a particular set of decision values are each less than a particular decision value threshold; determining, based on determining that the threshold amount of the decision values of the particular set of decision values are each less than the particular decision value threshold, a set of probability values associated with each class of the plurality of classes of the local classification model; and determining, based on the set of probability values associated with each class of the plurality of classes of the local classification model, the particular class.

The set of decision values associated with each class of the plurality of classes of the local classification model may be determined using a support vector machine radial basis function (SVM-rbf) kernel function that utilizes a one-versus-all decision value technique, and the set of probability values associated with each class of the plurality of classes of the local classification model may be determined using an SVM-rbf kernel function that utilizes a probability value technique.

Identifying the particular class may comprise: determining a first set of decision values associated with each class of the plurality of classes of the local classification model; determining that a threshold amount of decision values of each of the first set of decision values are each greater than or equal to a particular decision value threshold; determining, based on determining that the threshold amount of the decision values of each of the first set of decision values are each greater than or equal to the particular decision value threshold, a second set of decision values associated with each class of the plurality of classes of the local classification model; and determining, based on the second set of decision values associated with each class of the plurality of classes of the local classification model, the particular class.

The first set of decision values associated with each class of the plurality of classes of the local classification model may be determined using a support vector machine radial basis function (SVM-rbf) kernel function that utilizes a one-versus-all decision value technique, and the second set of decision values associated with each class of the plurality of classes of the local classification model may be determined using an SVM-linear kernel function that utilizes an all-pairs decision value technique.

Identifying the prediction threshold associated with the particular class may comprise: determining a first set of decision values associated with the particular class; determining a second set of decision values associated with the particular class; determining a third set of decision values associated with at least one other class of the plurality of classes; and determining the prediction threshold associated with the particular class based on at least two of the first set of decision values, the second set of decision values, or the third set of decision values.

The first set of decision values associated with the particular class may be determined using a support vector machine radial basis function (SVM-rbf) kernel function that utilizes a self-prediction technique. The second set of decision values associated with the particular class may be determined using an SVM-rbf kernel function that utilizes a cross-validation technique. The third set of decision values associated with the at least one other class may be determined using an SVM-rbf kernel function that utilizes a binary classification technique.

Determining the prediction threshold associated with the particular class may comprise: determining that a first amount of decision values of the first set of decision values are less than a particular decision value threshold; determining that a second amount of decision values of the second set of decision values are less than the particular decision value threshold; determining that the first amount and the second amount are each greater than or equal to an amount threshold; and determining the prediction threshold based on at least one of a minimum decision value of the second set of decision values or a maximum decision value of the third set of decision values.

Determining the prediction threshold associated with the particular class may comprise: determining a first minimum decision value of the first set of decision values; determining a second minimum decision value of the second set of decision values; determining that at least one of the first minimum decision value or the second minimum decision value are greater than or equal to a particular decision value threshold; and determining the prediction threshold based on at least one of the second minimum decision value or a maximum decision value of the third set of decision values.

Determining the prediction threshold associated with the particular class may comprise: determining a first minimum decision value of the first set of decision values; determining a second minimum decision value of the second set of decision values; determining that each of the first minimum decision value and the second minimum decision value are less than a particular decision value threshold; and determining the prediction threshold based on at least one of the first minimum decision value or the second minimum decision value.

Some implementations described herein relate to a device according to claim 6. The device may include one or more memories and one or more processors coupled to the one or more memories. The one or more processors may be configured to obtain a spectroscopic measurement associated with a sample. The one or more processors may be configured to identify, based on the spectroscopic measurement, a particular class of a plurality of classes of a local classification model. The one or more processors may be configured to identify a prediction threshold associated with the particular class. The one or more processors may be configured to classify, based on the particular class and the prediction threshold, the spectroscopic measurement. The one or more processors may be configured to provide information indicating whether the sample belongs to the particular class based on classifying the spectroscopic measurement.

The one or more processors, to identify the particular class, may be configured to: determine a set of probability values associated with each class of the plurality of classes of the local classification model; and determine, based on the set of probability values associated with each class of the plurality of classes of the local classification model, the particular class.

The one or more processors, to identify the particular class, may be configured to: determine a set of decision values associated with each class of the plurality of classes of the local classification model; and determine, based on the set of decision values associated with each class of the plurality of classes of the local classification model, the particular class.

The one or more processors, to identify the prediction threshold associated with the particular class, may be configured to: determine that a first amount of decision values of a first set of decision values associated with the particular class are less than a particular decision value threshold; determine that a second amount of decision values of a second set of decision values associated with the particular class are less than the particular decision value threshold; determine that the first amount and the second amount are each greater than or equal to an amount threshold; and determine, based on determining that the first amount and the second amount are each greater than or equal to the amount threshold, the prediction threshold based on a minimum decision value of the second set of decision values.

The one or more processors, to identify the prediction threshold associated with the particular class, may be configured to: determine a first minimum decision value of a first set of decision values associated with the particular class; determine a second minimum decision value of a second set of decision values associated with the particular class; determine that at least one of the first minimum decision value or the second minimum decision value are greater than or equal to a particular decision value threshold; and determine, based on determining that at least one of the first minimum decision value or the second minimum decision value are greater than or equal to the particular decision value threshold, the prediction threshold based on the second minimum decision value.

The one or more processors, to identify the prediction threshold associated with the particular class, may be configured to: determine a first minimum decision value of a first set of decision values associated with the particular class; determine a second minimum decision value of a second set of decision values associated with the particular class; determine that each of the first minimum decision value and the second minimum decision value are less than a particular decision value threshold; and determine, based on determining that each of the first minimum decision value and the second minimum decision value are less than the particular decision value threshold, the prediction threshold based on at least one of the first minimum decision value or the second minimum decision value.

Some implementations described herein relate to a non-transitory computer-readable medium according to claim 10 that stores a set of instructions for a device. The set of instructions, when executed by one or more processors of the device, may cause the device to obtain a spectroscopic measurement associated with a sample. The set of instructions, when executed by one or more processors of the device, may cause the device to identify, based on the spectroscopic measurement, a particular class of a plurality of classes of a classification model. The set of instructions, when executed by one or more processors of the device, may cause the device to identify a prediction threshold associated with the particular class. The set of instructions, when executed by one or more processors of the device, may cause the device to classify, based on the particular class and the prediction threshold, the spectroscopic measurement. The set of instructions, when executed by one or more processors of the device, may cause the device to provide information indicating whether the sample belongs to the particular class based on classifying the spectroscopic measurement.

The one or more instructions, that cause the device to identify the particular class, may cause the device to: determine a set of decision values associated with each class of the plurality of classes of the classification model; and determine, based on the set of decision values associated with each class of the plurality of classes of the classification model, the particular class.

The one or more instructions, that cause the device to identify the particular class, may cause the device to: determine a set of probability values associated with each class of the plurality of classes of the classification model; and determine, based on the set of probability values associated with each class of the plurality of classes of the classification model, the particular class.

The one or more instructions, that cause the device to identify the prediction threshold associated with the particular class, may cause the device to: determine a first set of decision values associated with the particular class; determine a second set of decision values associated with the particular class; determine a third set of decision values associated with at least one other class of the plurality of classes; and determine the prediction threshold associated with the particular class based on at least two of the first set of decision values, the second set of decision values, or the third set of decision values.

### BRIEF DESCRIPTION OF THE DRAWINGS

Figs. 1A-1E are diagrams of an example implementation described herein.
Fig. 2 is a diagram of an example environment in which systems and/or methods described herein may be implemented.
Fig. 3 is a diagram of example components of one or more devices of Fig. 2.
Figs. 4-6 are flowcharts of example processes relating to utilizing prediction thresholds to facilitate spectroscopic classification.

### DETAILED DESCRIPTION

The following detailed description of example implementations refers to the accompanying drawings. The same reference numbers in different drawings may identify the same or similar elements. The following description uses a spectrometer as an example. However, the techniques, principles, procedures, and methods described herein may be used with any sensor, including but not limited to other optical sensors and spectral sensors.

Raw material identification (RMID) is a technique utilized to identify components (e.g., ingredients) of a particular sample for identification and/or verification. For example, RMID may be utilized to verify that ingredients in a pharmaceutical material correspond to a set of ingredients identified on a label. In some cases, a spectrometer may be utilized to perform spectroscopy on a sample (e.g., of the pharmaceutical material) to determine components of the sample. The spectrometer may determine a set of measurements of the sample and may provide the set of measurements for a spectroscopic determination. A spectroscopic classification technique (e.g., a classifier) may facilitate determination of the components of the sample based on the set of measurements of the sample.

However, some unknown samples (e.g., samples that have not been identified), which are to be subject to a spectroscopic classification, may not be included in classes that a classification model is configured to classify. For example, for a classification model trained to distinguish between types of fish, a user may inadvertently provide beef for classification. In this case, a control device may perform a spectroscopic classification of the particular material, and may provide a false positive identification of the particular material as a particular type of fish, which would be inaccurate.

As another example, a classification model may be trained to classify types of sugar (e.g., glucose, fructose, galactose, and/or the like) and quantify respective concentrations of each type of sugar in unknown samples. However, a user of a spectrometer and a control device may inadvertently attempt to classify an unknown sample of sugar based on incorrectly using the spectrometer to perform a measurement. For example, the user may operate the spectrometer at an incorrect distance from the unknown sample, under environmental conditions different from calibration conditions at which the spectrometer was performed to train the classification model, and/or the like. In this case, the control device may receive an inaccurate spectrum for the unknown sample, resulting in a false positive identification of the unknown sample as a first type of sugar at a first concentration, when the unknown sample is actually a second type of sugar at a second concentration.

Some implementations described herein utilize prediction thresholds to facilitate spectroscopic classification and therefore reduce false positive identifications. For example, a control device that receives a spectroscopic measurement of an unknown sample may generate a local classification model, based on the spectroscopic measurement, and a global classification model. The control device may identify a particular class of a plurality of classes of the local classification model (e.g., a class of which the unknown sample is most likely to belong) and may identify a prediction threshold associated with the particular class. The prediction threshold may be used to define a tolerance area around a boundary of the particular class. In this way, when the spectroscopic measurement for the unknown sample satisfies the prediction threshold of the particular class (e.g., within the tolerance area of the boundary of the particular class), the control device may determine that the unknown sample belongs to the particular class. Alternatively, when the spectroscopic measurement for the unknown sample is not within the prediction threshold of the particular class (e.g., not within the tolerance area of the boundary of the particular class), the control device may determine that the unknown sample does not belong to the particular class (and/or to any other class of the local classification model).

In this way, an accuracy of spectrometry is improved relative to spectroscopy performed without use of a local classification model and/or a prediction threshold. This reduces a likelihood of reporting a false positive identification of the unknown sample, which reduces a use of computing resources (e.g., processing resources, memory resources, communication resources, and/or power resources, among other examples) to recheck and/or verify identification of the unknown sample and/or to address issues that arise from false positive identification of the unknown sample.

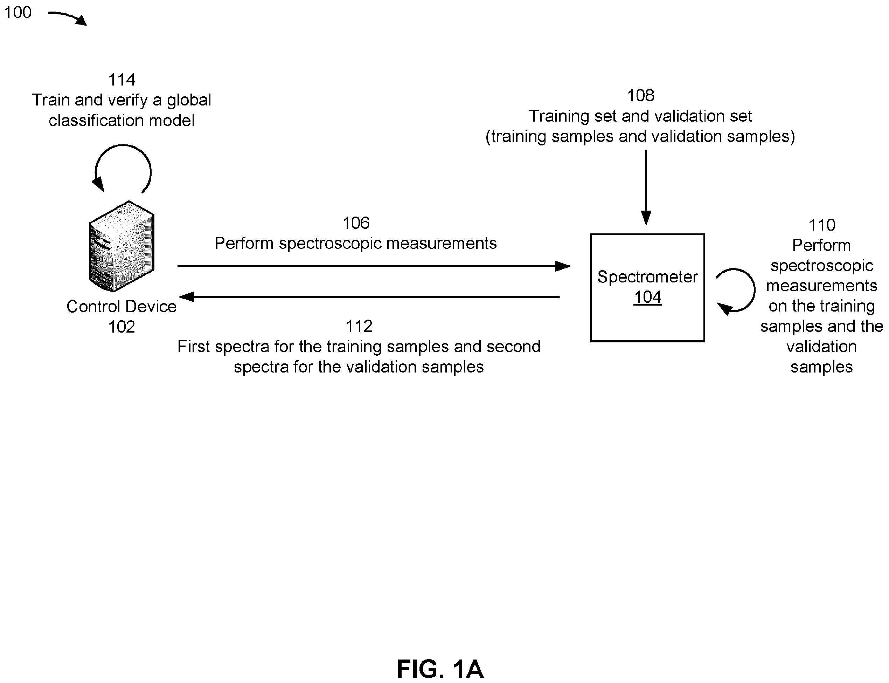

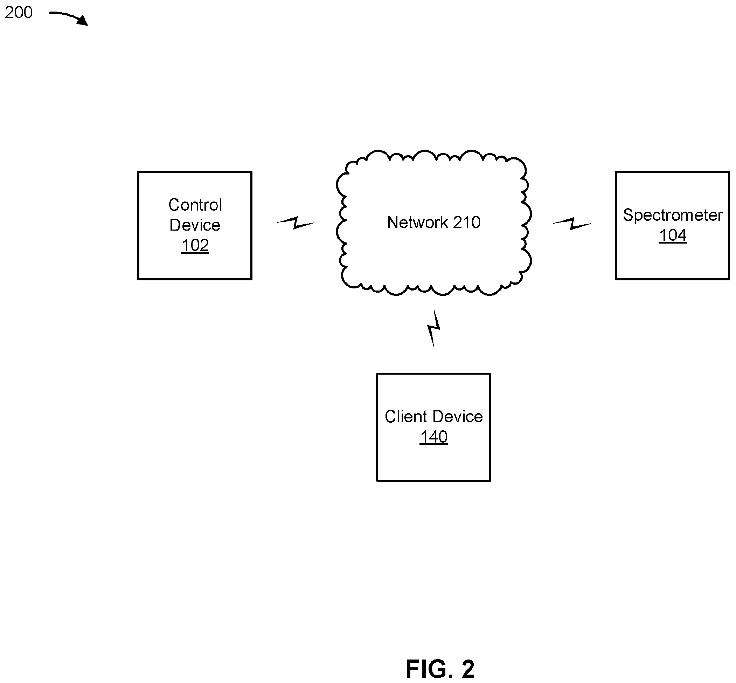

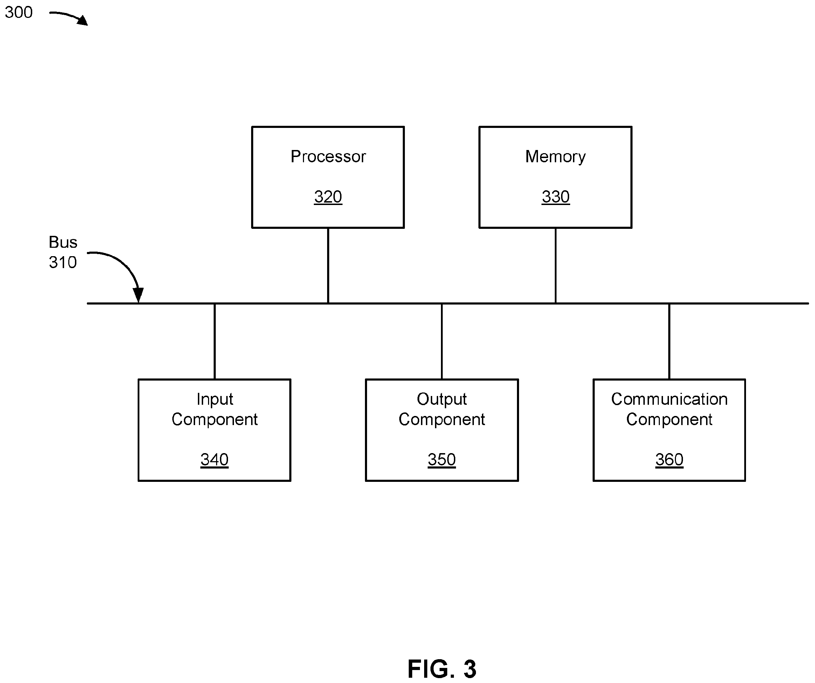

Figs. 1A-1E are diagrams of an example implementation 100 associated with utilizing prediction thresholds to facilitate spectroscopic classification. As shown in Figs. 1A-1E, example implementation 100 includes a control device 102 and a spectrometer 104. These devices are described in more detail below in connection with Fig. 2 and Fig. 3.

As further shown in Fig. 1A, and by reference number 106, the control device 102 may cause the spectrometer 104 to perform a set of spectroscopic measurements on a training set and a validation set (e.g., a set of known samples utilized for training and validation of a global classification model). For example, the control device 102 may transmit information to the spectrometer 104 to instruct the spectrometer 104 to perform a set of spectroscopic measurements on training set and validation set 108. The training set and validation set 108 may include a first set of training samples (e.g., measurements of which are utilized for training the global classification model) and a second set of validation samples (e.g., measurements of which are utilized for validating accuracy of the global classification model). For example, the training set and validation set 108 may include one or more versions of a set of materials (e.g., one or more versions manufactured by different manufacturers to control for manufacturing differences).

The training set and validation set 108 may be selected to include a threshold quantity of samples for each class of the global classification model. A "class" of the global classification model may refer to a grouping of similar materials, such as (in a pharmaceutical context) lactose materials, fructose materials, acetaminophen materials, ibuprophen materials, and/or aspirin materials, among other examples. Materials used to train the global classification model, and for which raw material identification is to be performed using the global classification model, may be termed materials of interest.

As shown by reference number 110, the spectrometer 104 may perform the set of spectroscopic measurements on the training set and validation set 108 (e.g., based on receiving the instruction from the control device 102). For example, the spectrometer 104 may determine a spectrum for each sample of the training set and validation set 108 to enable the control device 102 to generate a set of classes for classifying an unknown sample as one of the materials of interest for the global classification model.

As shown by reference number 112, the spectrometer104 may provide the set of spectroscopic measurements to the control device 102. For example, the control device 102 may receive a first set of spectra for the training samples and a second set of spectra for the validation samples. The control device 102 may store information identifying each sample of training set and validation set 108.

As shown by reference number 114, the control device 102 may generate a global classification model based on the set of spectroscopic measurements. For example, the control device 102 may utilize the set of spectroscopic measurements to identify classes of spectra with types or concentrations of materials. In some implementations, the control device 102 may train the global classification model when generating the classification model. For example, the control device 102 may cause the global classification model to be trained using the first set of spectra (e.g., measurements associated with the training samples). Additionally, or alternatively, the control device 102 may perform an assessment of the global classification model. For example, the control device 102 may validate the global classification model (e.g., for predictive strength) utilizing the second set of spectra (e.g., measurements associated with the validation samples).

In some implementations, the control device 102 may validate the global classification model using a multi-stage determination technique. For example, for in-situ local modeling based classification, the control device 102 may determine that the global classification model is accurate when utilized in association with a local classification model. In this way, the control device 102 ensures that the global classification model is generated with a threshold accuracy prior to providing the global classification model for utilization, such as by the control device 102 or another the control device 102 associated with another spectrometer 104.

In some implementations, the control device 102 may generate the global classification model using a particular determination technique and based on the set of spectroscopic measurements. For example, the control device 102 may generate the global classification model using a support vector machine (SVM) technique (e.g., a machine learning technique for information determination). "SVM" may refer to a supervised learning model that performs pattern recognition and uses confidence metrics for classification.

In some implementations, the control device 102 may utilize a particular type of kernel function to determine a similarly of two or more inputs (e.g., spectra) when generating the global classification model using the SVM technique. For example, the control device 102 may utilize a radial basis function (RBF) (e.g., termed SVM-rbf) type of kernel function, which may be represented as k(x,y) = exp(-∥x-y∥^2) for spectra x and y; a linear function (e.g., termed SVM-linear and termed hier-SVM-linear when utilized for a multi-stage determination technique) type of kernel function, which may be represented as k(x,y) = 〈x·y〉; a sigmoid function type of kernel function (e.g., termed SVM-sigmoid); and/or a polynomial function type of kernel function (e.g., termed SVM-polynomial); an exponential function type of kernel function (e.g., termed SVM-exponential); among other examples.

In some implementations, the control device 102 may utilize a particular type of confidence metric for SVM, such as a probability value (e.g., determination based on determining, using a probability value technique, a probability that a sample is a member of a class of a set of classes) and/or a decision value (e.g., determination utilizing a decision function based on pattern similarities to vote for a class, of a set of classes, as being the class of which the sample is a member). For example, during use of the global classification model with a decision value based SVM, the control device 102 may determine whether an unknown sample is located within a boundary of a constituent class based on a plotting of a spectrum of the unknown sample, and may assign the sample to a class based on whether the unknown sample is located within the boundary of the constituent class. In this way, the control device 102 may determine whether to assign an unknown spectrum to a particular class.

In some implementations, the control device 102 may utilize a particular class comparison technique for determining decision values. For example, the control device 102 may utilize a one-versus-all decision value technique (sometimes termed a one-versus-all-others decision value technique), where the global classification model is divided into a group of sub-models with each sub-model being compared to all other substrate-models, and the decision values being determined based on the comparison for each sub-model. Additionally, or alternatively, the control device 102 may utilize an all-pairs decision value technique, where the global classification model is divided into each possible pair of classes to form sub-models from which to determine decision values.

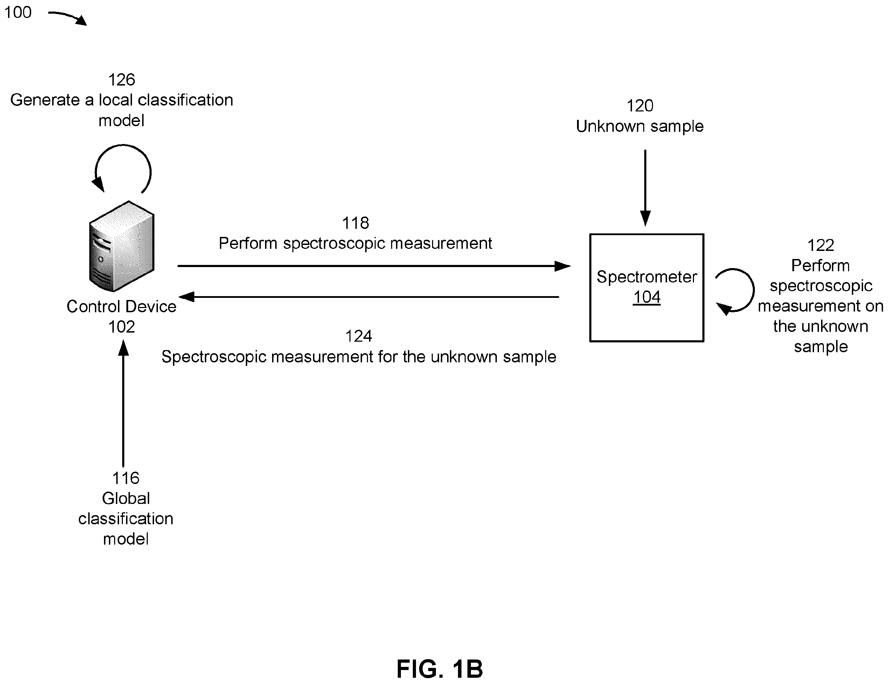

As shown in Fig. 1B, and by reference number 116, a control device 102 (e.g., the same control device 102 discussed above, or a different control device 102) may obtain the global classification model (e.g., from storage, from another control device 102 that generated the global classification model, and/or the like). As shown by reference number 118, the control device 102 may cause a spectrometer 104 (e.g., the same spectrometer 104 discussed above, or a different spectrometer 104) to perform a spectroscopic measurement. For example, the control device 102 may provide an instruction to cause the spectrometer 104 to obtain a spectrum for an unknown sample 120 (e.g., an unknown sample for which classification is to be performed). As shown by reference number 122, the spectrometer 104 may perform the spectroscopic measurement on the unknown sample 120 (e.g., based on receiving the instruction from the control device 102). For example, the spectrometer 104 may determine a spectrum for the unknown sample 120. As shown by reference number 124, the spectrometer 104 may provide the spectroscopic measurement to the control device 102. For example, the control device 102 may receive the spectroscopic measurement and may store the spectroscopic measurement.

As further shown in Fig. 1B, and by reference number 126, the control device 102 may generate a local classification model (e.g., using in-situ local modeling). For example, the control device 102 may process the spectroscopic measurement and/or the global classification model to generate the local classification model. In some implementations, the control device 102 may determine a plurality of confidence metrics (e.g., probability values, decision values, and/or other examples) corresponding to a likelihood that the unknown sample belongs to a plurality of classes included in the global classification model. In this case, the control device 102 may select a set of classes, of the plurality of classes of the global classification model, based on the plurality of confidence metrics (e.g., a set of N classes with the N highest confidence metrics, where N ≥ 2), and may generate a local classification model based on the set of classes. The local classification model may be an in-situ local classification model that is generated using the SVM technique and the set of classes.

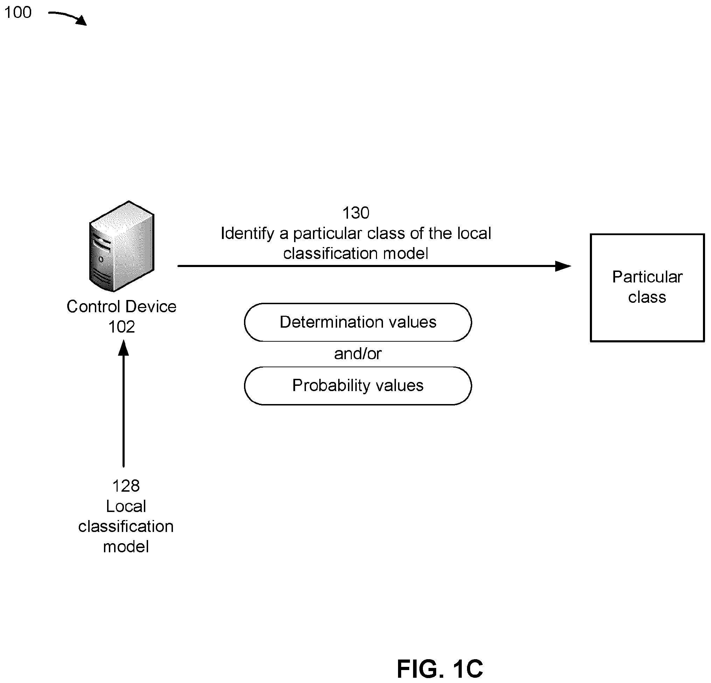

As shown in Fig. 1C, and by reference number 128, a control device 102 (e.g., one of the control devices 102 discussed above, or a different control device 102) may obtain the local classification model (e.g., from storage, from another control device 102 that generated the local classification model, and/or the like). As shown by reference number 130, the control device 102 may identify a particular class of the local classification model. For example, the control device 102 may identify a "winner" class of a plurality of classes of the local classification model (e.g., a class to which the unknown sample 120 is most likely to belong, among the plurality of classes).

In some implementations, to identify the particular class, the control device 102 may determine a set of decision values associated with each class of the plurality of classes of the local classification model. For example, the control device 102 may determine the set of decision values using an SVM-rbf kernel function that utilizes a one-versus-all decision value technique. Further, the control device 102 may determine whether a threshold amount of decision values of a particular set of decision values (e.g., a majority of the decision values of the particular set of decision values, all of the decision values of the particular set of decision values, or other examples) are each less than a particular decision value threshold (e.g., zero, or another value). When the control device 102 determines that the threshold amount of the decision values of the particular set of decision values are each less than the particular decision value threshold, the control device 102 may determine a set of probability values associated with each class of the plurality of classes of the local classification model and may determine the particular class based on the set of probability values. For example, the control device 102 may determine the set of probability values using an SVM-rbf kernel function that utilizes a probability value technique and may select a class associated with a greatest probability value as the particular class. Alternatively, when the control device 102 determines that the threshold amount of the decision values of the particular set of decision values are each greater than or equal to the particular decision value threshold, the control device 102 may determine an additional set of decision values associated with each class of the plurality of classes of the local classification model and determine the particular class based on the additional set of decision values. For example, the control device 102 may determine the additional set of decision values using an SVM linear kernel function that utilizes an all-pairs decision value technique and may select a class associated with a greatest decision value as the particular class.

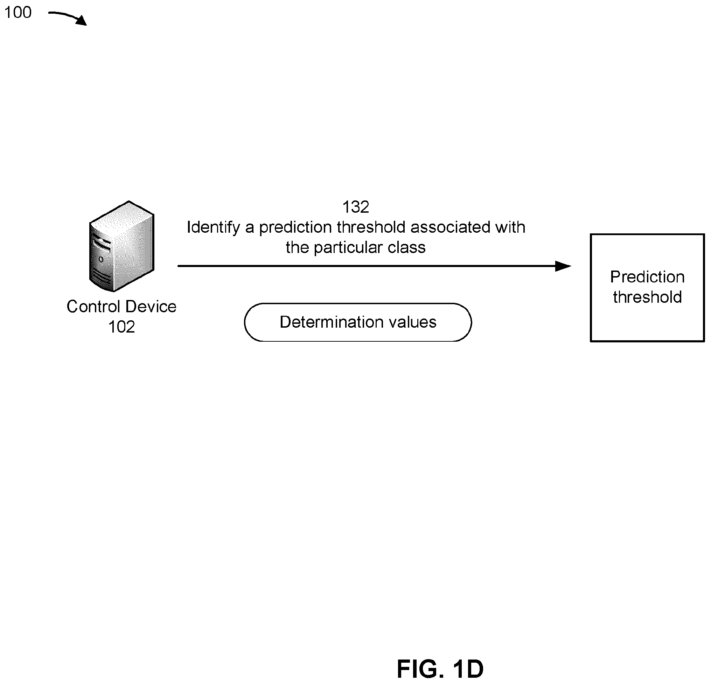

As shown in Fig. 1D, and by reference number 132, the control device 102 may identify a prediction threshold associated with the particular class. The prediction threshold may be used to define a tolerance area around a boundary of the particular class. In this way, when the spectroscopic measurement for the unknown sample 120 is within the prediction threshold of the particular class (e.g., within the tolerance area of the boundary of the particular class), the control device 102 may determine that the unknown sample 120 belongs to the particular class. Alternatively, when the spectroscopic measurement for the unknown sample 120 is not within the prediction threshold of the particular class (e.g., not within the tolerance area of the boundary of the particular class), the control device 102 may determine that the unknown sample 120 does not belong to the particular class (or to any other class of the local classification model). In this way, the control device 102 enables spectroscopy for the unknown sample 120 with improved accuracy relative to other classification models based on reducing a likelihood of reporting a false positive identification of the unknown sample 120 as being a material of interest.

In some implementations, to identify the prediction threshold associated with the particular class, the control device 102 may determine a first set of decision values associated with the particular class, may determine a second set of decision values associated with the particular class, and/or may determine a third set of decision values associated with at least one other class of the plurality of classes of the local classification model (e.g., that does not include the particular class). For example, the control device 102 may determine the first set of decision values associated with the particular class using an SVM-rbf kernel function that utilizes a self-prediction technique. As another example, the control device 102 may determine the second set of decision values associated with the particular class using an SVM-rbf kernel function that utilizes a cross-validation technique (e.g., a leave-one-out cross-validation technique). In an additional example, the control device 102 may determine the third set of decision values associated with the at least one other class using an SVM-rbf kernel function that utilizes a binary classification technique (e.g., a one-versus-all technique, such as with the particular class as the "one" in one-versus-all). The control device 102 may determine the prediction threshold associated with the particular class based on at least two of the first set of decision values, the second set of decision values, or the third set of decision values.

For example, the control device 102 may determine that a first amount of decision values of the first set of decision values are less than a particular decision value threshold (e.g., zero, or another value) and that a second amount of decision values of the second set of decision values are less than the particular decision value threshold. The control device 102 may determine that the first amount (e.g., a first percentage) and the second amount (e.g., a second percentage) are each greater than or equal to an amount threshold (e.g., a percentage threshold, such as 50%, 70%, 95%, or 100%, among other examples). Accordingly, the control device 102 may determine the prediction threshold using a first prediction scheme. For example, when the control device 102 uses the first prediction scheme, the control device 102 may determine the prediction threshold based on a minimum decision value of the second set of decision values and/or a maximum decision value of the third set of decision values.

As an alternative example (e.g., after determining that at least one of the first amount and the second amount is less than the amount threshold), the control device 102 may determine a first minimum decision value of the first set of decision values and/or a second minimum decision value of the second set of decision values. The control device 102 may determine whether at least one of the first minimum decision value or the second minimum decision value is greater than or equal to a particular decision value threshold (e.g., zero, or another value). When the control device 102 determines that at least one of the first minimum decision value or the second minimum decision value is greater than or equal to the particular decision value threshold, the control device 102 may determine the prediction threshold using the first prediction scheme. Alternatively, when the control device 102 determines that both of the first minimum decision value and the second minimum decision value are less than the particular decision value threshold, the control device 102 may determine the prediction threshold using a second prediction scheme. For example, when the control device 102 uses the second prediction scheme, the control device 102 may determine the prediction threshold based on the first minimum decision value and/or the second minimum decision value.

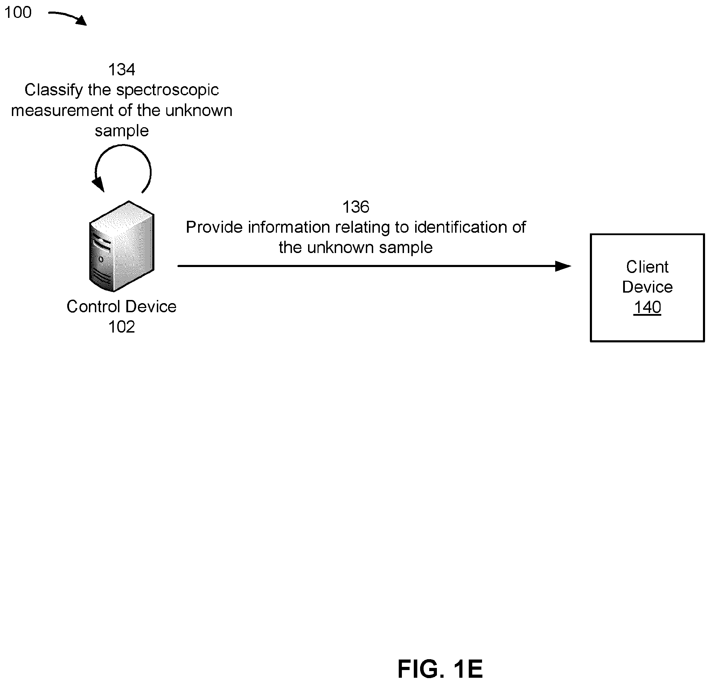

As shown in Fig. 1E, and by reference number 134, the control device 102 may classify the spectroscopic measurement of the unknown sample 120. In some implementations, the control device 102 may classify the spectroscopic measurement based on the particular class of the local classification model and the prediction threshold associated with the particular class. For example, the control device 102 may determine a decision value for the spectroscopic measurement and may determine whether the decision value is within a region defined by a boundary of the particular class and/or the prediction threshold (e.g., a tolerance area around the boundary of the particular class). When the control device 102 determines that the decision value is within the region, the control device 102 may classify the spectroscopic measurement as part of the particular class. Accordingly, the control device 102 may determine that the unknown sample 120 belongs to the particular class. Alternatively, when the control device 102 determines that the decision value is not within the region, the control device 102 may classify the spectroscopic measurement as not part of the particular class (and/or not part of any class of the plurality of classes of the local classification model). Accordingly, the control device 102 may determine that the unknown sample 120 does not belong to the particular class (and/or that the unknown sample 120 does not belong to any class of the plurality of classes of the local classification model).

As shown by reference number 136, the control device 102 may provide information relating to identification of the unknown sample 120. For example, based on classifying the spectroscopic measurement as part of the particular class and/or determining that the unknown sample 120 belongs to the particular class, the control device 102 may provide (e.g., to a client device 140) information indicating that the spectroscopic measurement associated with the unknown sample 120 is determined to be associated with the particular class, thereby identifying the unknown sample. As another example, based on not classifying the spectroscopic measurement as part of the particular class and/or determining that the unknown sample 120 does not belong to the particular class, the control device 102 may provide (e.g., to the client device 140) information indicating a classification failure, thereby reducing a likelihood of a false-positive determination. In some implementations, the control device 102 may provide the information to cause the information to be displayed (e.g., as an alert, as a message, and/or as part of an informational dashboard, among other examples) on a display (e.g., of the client device 140).

In this way, the control device 102 enables spectroscopy for an unknown sample 120 with improved accuracy relative to other classification models based on reducing a likelihood of reporting a false positive identification of the unknown sample 120 as being a material of interest.

As indicated above, Figs. 1A-1E are provided as an example. Other examples may differ from what is described with regard to Figs. 1A-1E. The number and arrangement of devices shown in Figs. 1A-1E are provided as an example. In practice, there may be additional devices, fewer devices, different devices, or differently arranged devices than those shown in Figs. 1A-1E. Furthermore, two or more devices shown in Figs. 1A-1E may be implemented within a single device, or a single device shown in Figs. 1A-1E may be implemented as multiple, distributed devices. Additionally, or alternatively, a set of devices (e.g., one or more devices) shown in Figs. 1A-1E may perform one or more functions described as being performed by another set of devices shown in Figs. 1A-1E.

Fig. 2 is a diagram of an example environment 200 in which systems and/or methods, described herein, may be implemented. As shown in Fig. 2, environment 200 may include the control device 102, the spectrometer 104, the client device 140, and a network 210. Devices of environment 200 may interconnect via wired connections, wireless connections, or a combination of wired and wireless connections.

The control device 102 includes one or more devices capable of storing, processing, and/or routing information associated with identifying an unknown sample based on a spectroscopic measurement. For example, the control device 102 may include a server, a computer (e.g., a desktop computer, a laptop computer, or a tablet computer), a wearable device, a cloud computing device in a cloud computing environment, a mobile device, a smart phone, or the like that generates a classification model using a particular classifier and based on a set of spectroscopic measurements of a training set, and/or utilizes the classification model to identify an unknown sample. In some implementations, multiple control devices 102 may utilize a common classification model. For example, a first control device 102 may generate the classification model and provide the classification model to a second control device 102, which may use the classification model to identify an unknown sample (e.g., at a restaurant, at a meat packaging plant, or a pharmacy, among other examples). For example, the control device 102 may utilize an SVM type of classifier with a linear kernel, a rbf kernel, or another kernel. In this case, the control device 102 may perform a classification based on a confidence measure technique, a decision value technique, or another technique. In some implementations, the control device 102 may be associated with a particular spectrometer 104. In some implementations, the control device 102 may be associated with multiple spectrometers 104. In some implementations, the control device 102 may receive information from and/or transmit information to another device in environment 200, such as the spectrometer 104 and/or the client device 140.

The spectrometer 104 includes one or more devices capable of performing a spectroscopic measurement on a sample. For example, the spectrometer 104 may include a spectrometer device that performs spectroscopy (e.g., vibrational spectroscopy, such as near infrared (NIR) spectroscopy, mid-infrared spectroscopy (mid-IR), Raman spectroscopy, or the like). In some implementations, the spectrometer 104 may receive information from and/or transmit information to another device in environment 200, such as the control device 102 and/or the client device 140.

The client device 140 includes one or more devices capable of receiving, generating, storing, processing, and/or providing information associated with identifying an unknown sample based on a spectroscopic measurement, as described elsewhere herein. The client device 140 may include a communication device and/or a computing device. For example, the client device 140 may include a wireless communication device, a mobile phone, a user equipment, a laptop computer, a tablet computer, a desktop computer, or a similar type of device. In some implementations, the client device 140 may receive information from and/or transmit information to another device in environment 200, such as the control device 102 and/or the spectrometer 104.

Network 210 may include one or more wired and/or wireless networks. For example, network 210 may include a cellular network (e.g., a long-term evolution (LTE) network, a 3G network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. For example, although the control device 102 and the spectrometer 104 are described herein as being two separate devices, the control device 102 and the spectrometer 104 may be implemented within a single device. Additionally, or alternatively, a set of devices (e.g., one or more devices) of environment 200 may perform one or more functions described as being performed by another set of devices of environment 200.

Fig. 3 is a diagram of example components of a device 300, which may correspond to the control device 102, the spectrometer 104, and/or the client device 140. In some implementations, the control device 102, the spectrometer 104, and/or the client device 140 may include one or more devices 300 and/or one or more components of device 300. As shown in Fig. 3, device 300 may include a bus 310, a processor 320, a memory 330, an input component 340, an output component 350, and a communication component 360.

Bus 310 includes one or more components that enable wired and/or wireless communication among the components of device 300. Bus 310 may couple together two or more components of Fig. 3, such as via operative coupling, communicative coupling, electronic coupling, and/or electric coupling. Processor 320 includes a central processing unit, a graphics processing unit, a microprocessor, a controller, a microcontroller, a digital signal processor, a field-programmable gate array, an application-specific integrated circuit, and/or another type of processing component. Processor 320 is implemented in hardware, firmware, or a combination of hardware and software. In some implementations, processor 320 includes one or more processors capable of being programmed to perform one or more operations or processes described elsewhere herein.

Memory 330 includes volatile and/or nonvolatile memory. For example, memory 330 may include random access memory (RAM), read only memory (ROM), a hard disk drive, and/or another type of memory (e.g., a flash memory, a magnetic memory, and/or an optical memory). Memory 330 may include internal memory (e.g., RAM, ROM, or a hard disk drive) and/or removable memory (e.g., removable via a universal serial bus connection). Memory 330 may be a non-transitory computer-readable medium. Memory 330 stores information, instructions, and/or software (e.g., one or more software applications) related to the operation of device 300. In some implementations, memory 330 includes one or more memories that are coupled to one or more processors (e.g., processor 320), such as via bus 310.

Input component 340 enables device 300 to receive input, such as user input and/or sensed input. For example, input component 340 may include a touch screen, a keyboard, a keypad, a mouse, a button, a microphone, a switch, a sensor, a global positioning system sensor, an accelerometer, a gyroscope, and/or an actuator. Output component 350 enables device 300 to provide output, such as via a display, a speaker, and/or a light-emitting diode. Communication component 360 enables device 300 to communicate with other devices via a wired connection and/or a wireless connection. For example, communication component 360 may include a receiver, a transmitter, a transceiver, a modem, a network interface card, and/or an antenna.

Device 300 may perform one or more operations or processes described herein. For example, a non-transitory computer-readable medium (e.g., memory 330) may store a set of instructions (e.g., one or more instructions or code) for execution by processor 320. Processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, processor 320 may be configured to perform one or more operations or processes described herein. Thus, implementations described herein are not limited to any specific combination of hardware circuitry and software.

The number and arrangement of components shown in Fig. 3 are provided as an example. Device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

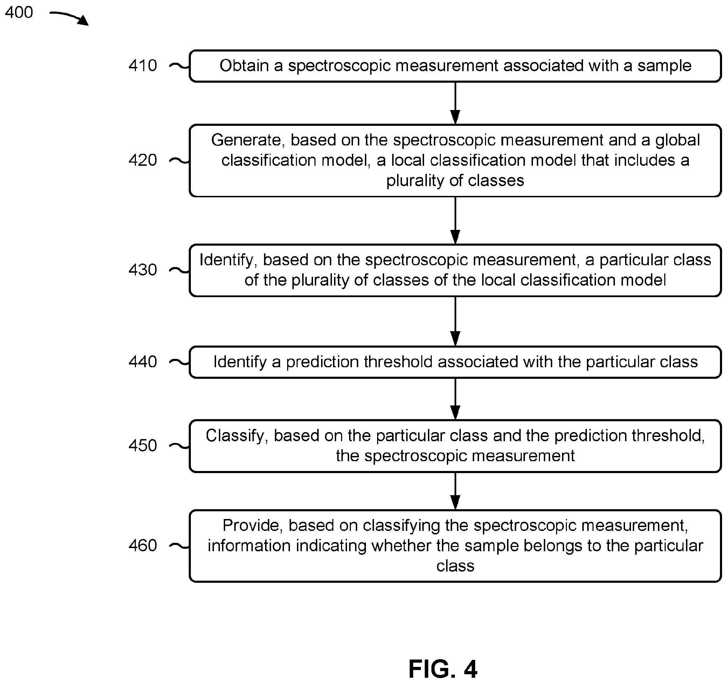

Fig. 4 is a flowchart of an example process 400 associated with utilizing prediction thresholds to facilitate spectroscopic classification. **In** some implementations, one or more process blocks of Fig. 4 may be performed by a device (e.g., control device 102). **In** some implementations, one or more process blocks of Fig. 4 may be performed by another device or a group of devices separate from or including the device, such as a spectrometer (e.g., spectrometer 104) and/or a client device (e.g., client device 140). Additionally, or alternatively, one or more process blocks of Fig. 4 may be performed by one or more components of device 300, such as processor 320, memory 330, input component 340, output component 350, and/or communication component 360.

As shown in Fig. 4, process 400 may include obtaining a spectroscopic measurement associated with a sample (block 410). For example, the device may obtain a spectroscopic measurement associated with a sample, as described above.

As further shown in Fig. 4, process 400 may include generating, based on the spectroscopic measurement and a global classification model, a local classification model that includes a plurality of classes (block 420). For example, the device may generate, based on the spectroscopic measurement and a global classification model, a local classification model that includes a plurality of classes, as described above.

As further shown in Fig. 4, process 400 may include identifying, based on the spectroscopic measurement, a particular class of the plurality of classes of the local classification model (block 430). For example, the device may identify, based on the spectroscopic measurement, a particular class of the plurality of classes of the local classification model, as described above.

As further shown in Fig. 4, process 400 may include identifying a prediction threshold associated with the particular class (block 440). For example, the device may identify a prediction threshold associated with the particular class, as described above.

As further shown in Fig. 4, process 400 may include classifying, based on the particular class and the prediction threshold, the spectroscopic measurement (block 450). For example, the device may classify, based on the particular class and the prediction threshold, the spectroscopic measurement, as described above.

As further shown in Fig. 4, process 400 may include providing, based on classifying the spectroscopic measurement, information indicating whether the sample belongs to the particular class (block 460). For example, the device may provide, based on classifying the spectroscopic measurement, information indicating whether the sample belongs to the particular class, as described above.

Process 400 may include additional implementations, such as any single implementation or any combination of implementations described below and/or in connection with one or more other processes described elsewhere herein.

**In** a first implementation, identifying the particular class comprises determining a set of decision values associated with each class of the plurality of classes of the local classification model, determining that a threshold amount of decision values of a particular set of decision values are each less than a particular decision value threshold, determining, based on determining that the threshold amount of the decision values of the particular set of decision values are each less than the particular decision value threshold, a set of probability values associated with each class of the plurality of classes of the local classification model, and determining, based on the set of probability values associated with each class of the plurality of classes of the local classification model, the particular class.

**In** a second implementation, alone or in combination with the first implementation, the set of decision values associated with each class of the plurality of classes of the local classification model are determined using a support vector machine radial basis function (SVM-rbf) kernel function that utilizes a one-versus-all decision value technique, and the set of probability values associated with each class of the plurality of classes of the local classification model are determined using an SVM-rbf kernel function that utilizes a probability value technique.

**In** a third implementation, alone or in combination with one or more of the first and second implementations, identifying the particular class comprises determining a first set of decision values associated with each class of the plurality of classes of the local classification model, determining that a threshold amount of decision values of each of the first set of decision values are each greater than or equal to a particular decision value threshold, determining, based on determining that the threshold amount of the decision values of each of the first set of decision values are each greater than or equal to the particular decision value threshold, a second set of decision values associated with each class of the plurality of classes of the local classification model, and determining, based on the second set of decision values associated with each class of the plurality of classes of the local classification model, the particular class.

**In** a fourth implementation, alone or in combination with one or more of the first through third implementations, the first set of decision values associated with each class of the plurality of classes of the local classification model are determined using an SVM-rbf kernel function that utilizes a one-versus-all decision value technique, and the second set of decision values associated with each class of the plurality of classes of the local classification model are determined using an SVM-linear kernel function that utilizes an all-pairs decision value technique.

**In** a fifth implementation, alone or in combination with one or more of the first through fourth implementations, identifying the prediction threshold associated with the particular class comprises determining a first set of decision values associated with the particular class, determining a second set of decision values associated with the particular class, determining a third set of decision values associated with at least one other class of the plurality of classes, and determining the prediction threshold associated with the particular class based on at least two of the first set of decision values, the second set of decision values, or the third set of decision values.

**In** a sixth implementation, alone or in combination with one or more of the first through fifth implementations, the first set of decision values associated with the particular class are determined using an SVM-rbf kernel function that utilizes a self-prediction technique, the second set of decision values associated with the particular class are determined using an SVM-rbf kernel function that utilizes a cross-validation technique, and the third set of decision values associated with the at least one other class are determined using an SVM-rbf kernel function that utilizes a binary classification technique.

In a seventh implementation, alone or in combination with one or more of the first through sixth implementations, determining the prediction threshold associated with the particular class comprises determining that a first amount of decision values of the first set of decision values are less than a particular decision value threshold, determining that a second amount of decision values of the second set of decision values are less than the particular decision value threshold, determining that the first amount and the second amount are each greater than or equal to an amount threshold, and determining the prediction threshold based on at least one of a minimum decision value of the second set of decision values or a maximum decision value of the third set of decision values.

In an eighth implementation, alone or in combination with one or more of the first through seventh implementations, determining the prediction threshold associated with the particular class comprises determining a first minimum decision value of the first set of decision values, determining a second minimum decision value of the second set of decision values, determining that at least one of the first minimum decision value or the second minimum decision value are greater than or equal to a particular decision value threshold, and determining the prediction threshold based on at least one of the second minimum decision value or a maximum decision value of the third set of decision values.

In a ninth implementation, alone or in combination with one or more of the first through eighth implementations, determining the prediction threshold associated with the particular class comprises determining a first minimum decision value of the first set of decision values, determining a second minimum decision value of the second set of decision values, determining that each of the first minimum decision value and the second minimum decision value are less than a particular decision value threshold, and determining the prediction threshold based on at least one of the first minimum decision value or the second minimum decision value.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

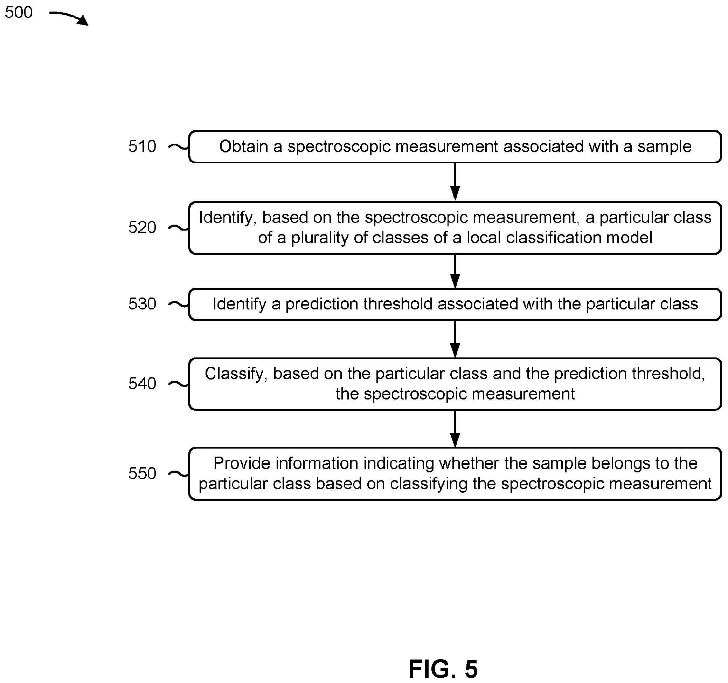

Fig. 5 is a flowchart of an example process 500 associated with utilizing prediction thresholds to facilitate spectroscopic classification. **In** some implementations, one or more process blocks of Fig. 5 may be performed by a device (e.g., control device 102). **In** some implementations, one or more process blocks of Fig. 5 may be performed by another device or a group of devices separate from or including the device, such as a spectrometer (e.g., spectrometer 104) and/or a client device (e.g., client device 140). Additionally, or alternatively, one or more process blocks of Fig. 5 may be performed by one or more components of device 300, such as processor 320, memory 330, input component 340, output component 350, and/or communication component 360.

As shown in Fig. 5, process 500 may include obtaining a spectroscopic measurement associated with a sample (block 510). For example, the device may obtain a spectroscopic measurement associated with a sample, as described above.

As further shown in Fig. 5, process 500 may include identifying, based on the spectroscopic measurement, a particular class of a plurality of classes of a local classification model(block 520). For example, the device may identify, based on the spectroscopic measurement, a particular class of a plurality of classes of a local classification model, as described above. In some implementations, the local classification model was generated based on a global classification model.

As further shown in Fig. 5, process 500 may include identifying a prediction threshold associated with the particular class (block 530). For example, the device may identify a prediction threshold associated with the particular class, as described above.

As further shown in Fig. 5, process 500 may include classifying, based on the particular class and the prediction threshold, the spectroscopic measurement (block 540). For example, the device may classify, based on the particular class and the prediction threshold, the spectroscopic measurement, as described above.

As further shown in Fig. 5, process 500 may include providing information indicating whether the sample belongs to the particular class based on classifying the spectroscopic measurement (block 550). For example, the device may provide information indicating whether the sample belongs to the particular class based on classifying the spectroscopic measurement, as described above.

Process 500 may include additional implementations, such as any single implementation or any combination of implementations described below and/or in connection with one or more other processes described elsewhere herein.

In a first implementation, process 500 includes determining a set of probability values associated with each class of the plurality of classes of the local classification model, and determining, based on the set of probability values associated with each class of the plurality of classes of the local classification model, the particular class.

In a second implementation, alone or in combination with the first implementation, process 500 includes determining a set of decision values associated with each class of the plurality of classes of the local classification model, and determining, based on the set of decision values associated with each class of the plurality of classes of the local classification model, the particular class.

In a third implementation, alone or in combination with one or more of the first and second implementations, identifying the prediction threshold includes determining that a first amount of decision values of a first set of decision values associated with the particular class are less than a particular decision value threshold, determining that a second amount of decision values of a second set of decision values associated with the particular class are less than the particular decision value threshold, determining that the first amount and the second amount are each greater than or equal to an amount threshold, and determining, based on determining that the first amount and the second amount are each greater than or equal to the amount threshold, the prediction threshold based on a minimum decision value of the second set of decision values.

In a fourth implementation, alone or in combination with one or more of the first through third implementations, identifying the prediction threshold includes determining a first minimum decision value of a first set of decision values associated with the particular class, determining a second minimum decision value of a second set of decision values associated with the particular class, determining that at least one of the first minimum decision value or the second minimum decision value are greater than or equal to a particular decision value threshold, and determining, based on determining that at least one of the first minimum decision value or the second minimum decision value are greater than or equal to the particular decision value threshold, the prediction threshold based on the second minimum decision value.

In a fifth implementation, alone or in combination with one or more of the first through fourth implementations, identifying the prediction threshold includes determining a first minimum decision value of a first set of decision values associated with the particular class, determining a second minimum decision value of a second set of decision values associated with the particular class, determining that each of the first minimum decision value and the second minimum decision value are less than a particular decision value threshold, and determining, based on determining that each of the first minimum decision value and the second minimum decision value are less than the particular decision value threshold, the prediction threshold based on at least one of the first minimum decision value or the second minimum decision value.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

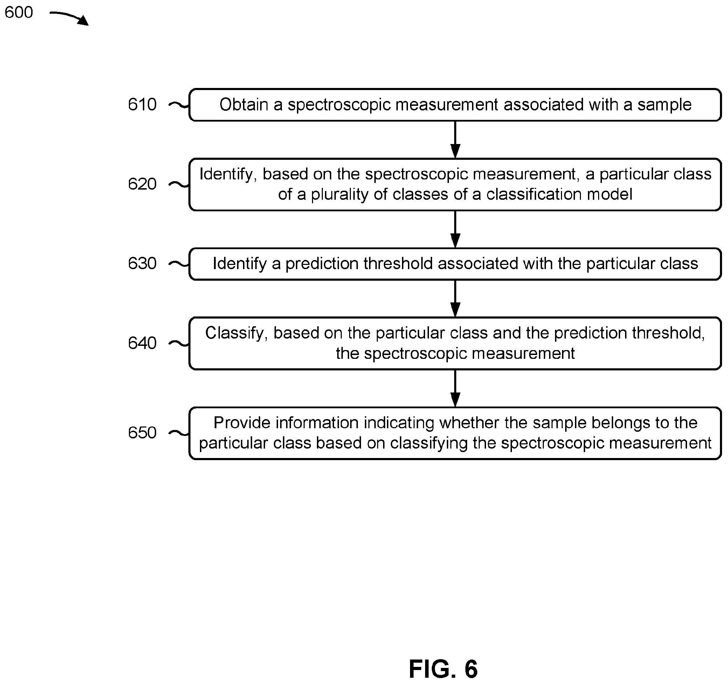

Fig. 6 is a flowchart of an example process 600 associated with utilizing prediction thresholds to facilitate spectroscopic classification. In some implementations, one or more process blocks of Fig. 6 may be performed by a device (e.g., control device 102). In some implementations, one or more process blocks of Fig. 6 may be performed by another device or a group of devices separate from or including the device, such as a spectrometer (e.g., spectrometer 104) and/or a client device (e.g., client device 140). Additionally, or alternatively, one or more process blocks of Fig. 6 may be performed by one or more components of device 300, such as processor 320, memory 330, input component 340, output component 350, and/or communication component 360.

As shown in Fig. 6, process 600 may include obtaining a spectroscopic measurement associated with a sample (block 610). For example, the device may obtain a spectroscopic measurement associated with a sample, as described above.

As further shown in Fig. 6, process 600 may include identifying, based on the spectroscopic measurement, a particular class of a plurality of classes of a classification model (block 620). For example, the device may identify, based on the spectroscopic measurement, a particular class of a plurality of classes of a classification model, as described above.

As further shown in Fig. 6, process 600 may include identifying a prediction threshold associated with the particular class (block 630). For example, the device may identify a prediction threshold associated with the particular class, as described above.

As further shown in Fig. 6, process 600 may include classifying, based on the particular class and the prediction threshold, the spectroscopic measurement (block 640). For example, the device may classify, based on the particular class and the prediction threshold, the spectroscopic measurement, as described above.

As further shown in Fig. 6, process 600 may include providing information indicating whether the sample belongs to the particular class based on classifying the spectroscopic measurement (block 650). For example, the device may provide information indicating whether the sample belongs to the particular class based on classifying the spectroscopic measurement, as described above.

Process 600 may include additional implementations, such as any single implementation or any combination of implementations described below and/or in connection with one or more other processes described elsewhere herein.

In a first implementation, identifying the particular class includes determining a set of decision values associated with each class of the plurality of classes of the classification model, and determining, based on the set of decision values associated with each class of the plurality of classes of the classification model, the particular class.

In a second implementation, alone or in combination with the first implementation, identifying the particular class includes determining a set of probability values associated with each class of the plurality of classes of the classification model, and determining, based on the set of probability values associated with each class of the plurality of classes of the classification model, the particular class.

In a third implementation, alone or in combination with one or more of the first and second implementations, identifying the prediction threshold includes determining a first set of decision values associated with the particular class, determining a second set of decision values associated with the particular class, determining a third set of decision values associated with at least one other class of the plurality of classes, and determining the prediction threshold associated with the particular class based on at least two of the first set of decision values, the second set of decision values, or the third set of decision values.

Although Fig. 6 shows example blocks of process 600, in some implementations, process 600 may include additional blocks, fewer blocks, different blocks, or differently arranged blocks than those depicted in Fig. 6. Additionally, or alternatively, two or more of the blocks of process 600 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations, always within the scope of the appended claims.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method for spectroscopic classification of unknown samples, comprising:
obtaining, by a device, a spectroscopic measurement associated with a sample;
generating, by a device, a global classification model using a support vector machine (SVM) technique, wherein the SVM technique uses a kernel function to determine the similarity between two spectroscopic measurements, wherein the global classification model comprises a plurality of classes, and wherein each class corresponds to a grouping of similar materials;
generating, by the device, a local classification model by processing the spectroscopic measurement, and the global classification model and selecting a set of classes, of the plurality of classes of the global classification model, based on a plurality of confidence metrics;
wherein the local classification model is an in-situ local classification model generated using the SVM technique and the set of classes;
identifying, by the device and based on the spectroscopic measurement, a particular class of the set of classes of the local classification model;
identifying, by the device, a prediction threshold associated with the particular class,
wherein the prediction threshold is a tolerance area around a boundary of the particular class;
wherein identifying the prediction threshold associated with the particular class comprises:
determining a first set of decision values associated with the particular class;
determining a second set of decision values associated with the particular class;
determining a third set of decision values associated with at least one other class of the plurality of classes; and
determining the prediction threshold associated with the particular class based on at least two of the first set of decision values, the second set of decision values, or the third set of decision values using either a first prediction scheme or a second prediction scheme; wherein:
the first set of decision values associated with the particular class are determined using a support vector machine radial basis function (SVM-rbf) kernel function that utilizes a self-prediction technique;
the second set of decision values associated with the particular class are determined using an SVM-rbf kernel function that utilizes a cross-validation technique; and
the third set of decision values associated with the at least one other class are determined using an SVM-rbf kernel function that utilizes a binary classification technique; and
wherein the first prediction scheme determines the prediction threshold based on a minimum decision value of the second set of decision values and a maximum decision value of the third set of decision values; and
wherein the second prediction scheme determines the prediction threshold based on the first minimum decision value and/or the second minimum decision value;
wherein the second prediction scheme is used when it is determined that both of the first minimum decision value of the first set of decision values and the second minimum decision value of the second set of decision values are less than a decision threshold;
classifying, by the device and based on the particular class and the prediction threshold, the spectroscopic measurement; and
providing, by the device and based on classifying the spectroscopic measurement, information indicating whether the sample belongs to the particular class.

2. The method of claim **1,** wherein identifying the particular class comprises:
determining that a threshold amount of decision values of a particular set of decision values are each less than a particular decision value threshold;
determining, based on determining that the threshold amount of the decision values of the particular set of decision values are each less than the particular decision value threshold, a set of probability values associated with each class of the plurality of classes of the local classification model, wherein the probability values are determined using a support vector machine radial basis function (SVM-rbf) kernel function using a probability value technique to select a class associated with a greatest probability value as the particular class; and
determining, based on the set of probability values associated with each class of the plurality of classes of the local classification model, the particular class;
wherein the set of decision values associated with each class of the plurality of classes of the local classification model and/or the first set of decision values associated with each class of the plurality of classes of the local classification model are determined using a SVM-rbf kernel function that utilizes a one-versus-all decision value technique, and
wherein the second set of decision values associated with each class of the plurality of classes of the local classification model are determined using an SVM-linear kernel function that utilizes an all-pairs decision value technique.

3. The method of claim 1 or claim 2, wherein identifying the particular class comprises:
determining a first set of decision values associated with each class of the plurality of classes of the local classification model;
determining that a threshold amount of decision values of each of the first set of decision values are each greater than or equal to a particular decision value threshold;
determining, based on determining that the threshold amount of the decision values of each of the first set of decision values are each greater than or equal to the particular decision value threshold, a second set of decision values associated with each class of the plurality of classes of the local classification model; and
determining, based on the second set of decision values associated with each class of the plurality of classes of the local classification model, the particular class;
wherein the set of decision values associated with each class of the plurality of classes of the local classification model and/or the first set of decision values associated with each class of the plurality of classes of the local classification model are determined using a support vector machine radial basis function (SVM-rbf) kernel function that utilizes a one-versus-all decision value technique, and
wherein the second set of decision values associated with each class of the plurality of classes of the local classification model are determined using an SVM-linear kernel function that utilizes an all-pairs decision value technique.

4. The method of any of claims 1 to 3, wherein determining the prediction threshold associated with the particular class comprises:
determining that a first amount of decision values of the first set of decision values are less than a particular decision value threshold;
determining that a second amount of decision values of the second set of decision values are less than the particular decision value threshold;
determining that the first amount and the second amount are each greater than or equal to an amount threshold; and
determining the prediction threshold based on at least one of a minimum decision value of the second set of decision values or a maximum decision value of the third set of decision values.

5. The method of any of claims 1 to 4, wherein determining the prediction threshold associated with the particular class comprises:
determining a first minimum decision value of the first set of decision values;
determining a second minimum decision value of the second set of decision values;
and further comprises:
determining that at least one of the first minimum decision value or the second minimum decision value are greater than or equal to a particular decision value threshold, and
determining the prediction threshold based on at least one of the second minimum decision value or a maximum decision value of the third set of decision values; and/or
determining that each of the first minimum decision value and the second minimum decision value are less than a particular decision value threshold; and
determining the prediction threshold based on at least one of the first minimum decision value or the second minimum decision value.

6. A device for spectroscopic classification of unknown samples, comprising:
one or more memories; and
one or more processors, coupled to the one or more memories, configured to:
obtain a spectroscopic measurement associated with a sample;
generate a global classification model using a support vector machine (SVM) technique, wherein the SVM technique uses a kernel function to determine the similarity between two spectroscopic measurements, wherein the global classification model comprises a plurality of classes, and wherein each class corresponds to a grouping of similar materials,
generate a local classification model by processing the spectroscopic measurement and the global classification model and select a set of classes, of the plurality of classes of the global classification model, based on a plurality of confidence metrics,
wherein the local classification model is an in-situ local classification model generated using the SVM technique and the set of classes; and
identify, based on the spectroscopic measurement, a particular class of the set of classes of the local classification model,
identify a prediction threshold associated with the particular class of the set of classes, wherein the prediction threshold is a tolerance area around a boundary of the particular class;
wherein identifying the prediction threshold associated with the particular class comprises:
determining a first set of decision values associated with the particular class;
determining a second set of decision values associated with the particular class;
determining a third set of decision values associated with at least one other class of the plurality of classes; and
determining the prediction threshold associated with the particular class based on at least two of the first set of decision values, the second set of decision values, or the third set of decision values using either a first prediction scheme or a second prediction scheme; wherein:
the first set of decision values associated with the particular class are determined using a support vector machine radial basis function (SVM-rbf) kernel function that utilizes a self-prediction technique;
the second set of decision values associated with the particular class are determined using an SVM-rbf kernel function that utilizes a cross-validation technique; and
the third set of decision values associated with the at least one other class are determined using an SVM-rbf kernel function that utilizes a binary classification technique; and
wherein the first prediction scheme determines the prediction threshold based on a minimum decision value of the second set of decision values and a maximum decision value of the third set of decision values; and
wherein the second prediction scheme determines the prediction threshold based on the first minimum decision value and/or the second minimum decision value;
wherein the second prediction scheme is used when it is determined that both of the first minimum decision value of the first set of decision values and the second minimum decision value of the second set of decision values are less than a decision threshold;
classify, based on the particular class and the prediction threshold, the spectroscopic measurement; and
provide information indicating whether the sample belongs to the particular class based on classifying the spectroscopic measurement.

7. The device of claim 6, wherein the one or more processors, to identify the particular class, are configured to:
determine a set of probability values associated with each class of the plurality of classes of the local classification model, wherein the probability values are determined using a support vector machine radial basis function (SVM-rbf) kernel function using a probability value technique to select a class associated with a greatest probability value as the particular class; and
determine, based on the set of probability values associated with each class of the plurality of classes of the local classification model, the particular class; and/or
determine a set of decision values associated with each class of the plurality of classes of the local classification model;
determine a threshold amount of the decision values of a particular set of decision values are each less than a particular decision value threshold; and
determine, based on the determination that the threshold amount of the decision values of the particular set of decision values are each less than the particular decision value threshold, a set of probability values associated with each class of the plurality of classes of the local classification model; and
determine based on the set of probability values associated with each class of the plurality of classes of the local classification model, the particular class;
wherein the set of decision values associated with each class of the plurality of classes of the local classification model and/or the first set of decision values associated with each class of the plurality of classes of the local classification model are determined using a SVM-rbf kernel function that utilizes a one-versus-all decision value technique, and
wherein the second set of decision values associated with each class of the plurality of classes of the local classification model are determined using an SVM-linear kernel function that utilizes an all-pairs decision value technique.

8. The device of claim 6 or claim 7, wherein the one or more processors, to identify the prediction threshold associated with the particular class, are configured to:
determine that a first amount of decision values of a first set of decision values associated with the particular class are less than a particular decision value threshold;
determine that a second amount of decision values of a second set of decision values associated with the particular class are less than the particular decision value threshold;
determine that the first amount and the second amount are each greater than or equal to an amount threshold; and
determine, based on determining that the first amount and the second amount are each greater than or equal to the amount threshold, the prediction threshold based on a minimum decision value of the second set of decision values.

9. The device of any of claims 6 to 8, wherein the one or more processors, to identify the prediction threshold associated with the particular class, are configured to:
determine a first minimum decision value of a first set of decision values associated with the particular class;
determine a second minimum decision value of a second set of decision values associated with the particular class;
wherein the one or more processors are further configured to:
determine that at least one of the first minimum decision value or the second minimum decision value are greater than or equal to a particular decision value threshold, and
determine, based on determining that at least one of the first minimum decision value or the second minimum decision value are greater than or equal to the particular decision value threshold, the prediction threshold based on the second minimum decision value; and/or
determine that each of the first minimum decision value and the second minimum decision value are less than a particular decision value threshold; and
determine, based on determining that each of the first minimum decision value and the second minimum decision value are less than the particular decision value threshold, the prediction threshold based on at least one of the first minimum decision value or the second minimum decision value.

10. A non-transitory computer-readable medium storing a set of instructions, the set of instructions comprising:
one or more instructions that, when executed by one or more processors of a device, cause the device to:
obtain a spectroscopic measurement associated with a sample,
generate a global classification model using a support vector machine (SVM) technique, wherein the SVM technique uses a kernel function to determine the similarity between two spectroscopic measurements, wherein the global classification model comprises a plurality of classes, and wherein each class corresponds to a grouping of similar materials,
generate a local classification model by processing the spectroscopic measurement and the global classification model and select a set of classes, of the plurality of classes of the global classification model, based on a plurality of confidence metrics;
wherein the local classification model is an in-situ local classification model generated using the SVM technique and the set of classes; and
identify, based on the spectroscopic measurement, a particular class of the set of classes of the local classification model;
identify a prediction threshold associated with the particular class of the set of classes, wherein the prediction threshold is a tolerance area around a boundary of the particular class;
wherein identifying the prediction threshold associated with the particular class comprises:
determining a first set of decision values associated with the particular class;
determining a second set of decision values associated with the particular class;
determining a third set of decision values associated with at least one other class of the plurality of classes; and
determining the prediction threshold associated with the particular class based on at least two of the first set of decision values, the second set of decision values, or the third set of decision values using either a first prediction scheme or a second prediction scheme; wherein:
the first set of decision values associated with the particular class are determined using a support vector machine radial basis function (SVM-rbf) kernel function that utilizes a self-prediction technique;
the second set of decision values associated with the particular class are determined using an SVM-rbf kernel function that utilizes a cross-validation technique; and
the third set of decision values associated with the at least one other class are determined using an SVM-rbf kernel function that utilizes a binary classification technique; and
wherein the first prediction scheme determines the prediction threshold based on a minimum decision value of the second set of decision values and a maximum decision value of the third set of decision values; and
wherein the second prediction scheme determines the prediction threshold based on the first minimum decision value and/or the second minimum decision value;
wherein the second prediction scheme is used when it is determined that both of the first minimum decision value of the first set of decision values and the second minimum decision value of the second set of decision values are less than a decision threshold;
classify, based on the particular class and the prediction threshold, the spectroscopic measurement; and
provide information indicating whether the sample belongs to the particular class based on classifying the spectroscopic measurement.

## Patentansprüche

1. Ein Verfahren zum spektroskopischen Klassifizieren von unbekannten Proben, das Folgendes beinhaltet:
Erhalten, durch eine Vorrichtung, einer spektroskopischen Messung, die mit einer Probe assoziiert ist;
Erzeugen, durch eine Vorrichtung, eines globalen Klassifizierungsmodells unter Verwendung einer Support-Vector-Machine(SVM)-Technik, wobei die SVM-Technik eine Kernelfunktion verwendet, um die Ähnlichkeit zwischen zwei spektroskopischen Messungen zu bestimmen, wobei das globale Klassifizierungsmodell eine Vielzahl von Klassen beinhaltet und wobei jede Klasse einer Gruppierung von ähnlichen Materialien entspricht;
Erzeugen, durch die Vorrichtung, eines lokalen Klassifizierungsmodells durch Verarbeiten der spektroskopischen Messung, und des globalen Klassifizierungsmodells und Auswählen eines Satzes von Klassen aus der Vielzahl von Klassen des globalen Klassifizierungsmodells basierend auf einer Vielzahl von Konfidenzmetriken;
wobei das lokale Klassifizierungsmodell ein lokales In-situ-Klassifizierungsmodell ist, das unter Verwendung der SVM-Technik und des Satzes von Klassen erzeugt wird;
Identifizieren, durch die Vorrichtung und basierend auf der spektroskopischen Messung, einer bestimmten Klasse des Satzes von Klassen des lokalen Klassifizierungsmodells;
Identifizieren, durch die Vorrichtung, einer Vorhersageschwelle, die mit der bestimmten Klasse assoziiert ist, wobei die Vorhersageschwelle ein Toleranzbereich um eine Grenze der bestimmten Klasse ist;
wobei das Identifizieren der Vorhersageschwelle, die mit der bestimmten Klasse assoziiert ist, Folgendes beinhaltet:
Bestimmen eines ersten Satzes von Entscheidungswerten, die mit der bestimmten Klasse assoziiert sind;
Bestimmen eines zweiten Satzes von Entscheidungswerten, die mit der bestimmten Klasse assoziiert sind;
Bestimmen eines dritten Satzes von Entscheidungswerten, die mit mindestens einer anderen Klasse der Vielzahl von Klassen assoziiert sind; und
Bestimmen der Vorhersageschwelle, die mit der bestimmten Klasse assoziiert ist, basierend auf mindestens zwei des ersten Satzes von Entscheidungswerten, des zweiten Satzes von Entscheidungswerten oder des dritten Satzes von Entscheidungswerten unter Verwendung entweder eines ersten Vorhersageschemas oder eines zweiten Vorhersageschemas; wobei:
der erste Satz von Entscheidungswerten, die mit der bestimmten Klasse assoziiert sind, unter Verwendung einer Support-Vector-Machine-Radialbasisfunktions(SVM-rbf)-Kernelfunktion bestimmt wird, die eine Selbstvorhersagetechnik nutzt;
der zweite Satz von Entscheidungswerten, die mit der bestimmten Klasse assoziiert sind, unter Verwendung einer SVM-rbf-Kernelfunktion bestimmt wird, die eine Kreuzvalidierungstechnik nutzt; und
der dritte Satz von Entscheidungswerten, die mit der mindestens einen anderen Klasse assoziiert sind, unter Verwendung einer SVM-rbf-Kernelfunktion bestimmt wird, die eine Binärklassifikationstechnik nutzt; und
wobei das erste Vorhersageschema die Vorhersageschwelle basierend auf einem minimalen Entscheidungswert des zweiten Satzes von Entscheidungswerten und einem maximalen Entscheidungswert des dritten Satzes von Entscheidungswerten bestimmt; und
wobei das zweite Vorhersageschema die Vorhersageschwelle basierend auf dem ersten minimalen Entscheidungswert und/oder dem zweiten minimalen Entscheidungswert bestimmt;
wobei das zweite Vorhersageschema verwendet wird, wenn bestimmt wird, dass sowohl der erste minimale Entscheidungswert des ersten Satzes von Entscheidungswerten als auch der zweite minimale Entscheidungswert des zweiten Satzes von Entscheidungswerten kleiner als eine Entscheidungsschwelle sind;
Klassifizieren, durch die Vorrichtung und basierend auf der bestimmten Klasse und der Vorhersageschwelle, der spektroskopischen Messung; und
Bereitstellen, durch die Vorrichtung und basierend auf dem Klassifizieren der spektroskopischen Messung, von Informationen, die angeben, ob die Probe zu der bestimmten Klasse gehört.

2. Verfahren gemäß Anspruch 1, wobei das Identifizieren der bestimmten Klasse Folgendes beinhaltet:
Bestimmen, dass eine Schwellenmenge von Entscheidungswerten eines bestimmten Satzes von Entscheidungswerten jeweils kleiner als eine bestimmte Entscheidungswertschwelle ist;
Bestimmen, basierend auf dem Bestimmen, dass die Schwellenmenge der Entscheidungswerte des bestimmten Satzes von Entscheidungswerten jeweils kleiner als die bestimmte Entscheidungswertschwelle ist, eines Satzes von Wahrscheinlichkeitswerten, die mit jeder Klasse der Vielzahl von Klassen des lokalen Klassifizierungsmodells assoziiert sind, wobei die Wahrscheinlichkeitswerte unter Verwendung einer Support-Vector-Machine-Radialbasisfunktions(SVM-rbf)-Kernelfunktion unter Verwendung einer Wahrscheinlichkeitswerttechnik bestimmt werden, um eine Klasse auszuwählen, die mit einem größten Wahrscheinlichkeitswert als die bestimmte Klasse assoziiert ist; und
Bestimmen, basierend auf dem Satz von Wahrscheinlichkeitswerten, die mit jeder Klasse der Vielzahl von Klassen des lokalen Klassifizierungsmodells assoziiert sind, der bestimmten Klasse;
wobei der Satz von Entscheidungswerten, die mit jeder Klasse der Vielzahl von Klassen des lokalen Klassifizierungsmodells assoziiert sind, und/oder der erste Satz von Entscheidungswerten, die mit jeder Klasse der Vielzahl von Klassen des lokalen Klassifizierungsmodells assoziiert sind, unter Verwendung einer SVM-rbf-Kernelfunktion bestimmt werden, die eine Eins-gegen-Alle-Entscheidungswerttechnik nutzt, und
wobei der zweite Satz von Entscheidungswerten, die mit jeder Klasse der Vielzahl von Klassen des lokalen Klassifizierungsmodells assoziiert sind, unter Verwendung einer SVM-Linear-Kernelfunktion bestimmt werden, die eine Alle-Paare-Entscheidungswerttechnik nutzt.

3. Verfahren gemäß Anspruch 1 oder Anspruch 2, wobei das Identifizieren der bestimmten Klasse Folgendes beinhaltet:
Bestimmen eines ersten Satzes von Entscheidungswerten, die mit jeder Klasse der Vielzahl von Klassen des lokalen Klassifizierungsmodells assoziiert sind;
Bestimmen, dass eine Schwellenmenge von Entscheidungswerten von jedem des ersten Satzes von Entscheidungswerten jeweils größer als oder gleich einer bestimmten Entscheidungswertschwelle ist;
Bestimmen, basierend auf dem Bestimmen, dass die Schwellenmenge der Entscheidungswerte von jedem des ersten Satzes von Entscheidungswerten jeweils größer als oder gleich der bestimmten Entscheidungswertschwelle ist, eines zweiten Satzes von Entscheidungswerten, die mit jeder Klasse der Vielzahl von Klassen des lokalen Klassifizierungsmodells assoziiert sind; und
Bestimmen, basierend auf dem zweiten Satz von Entscheidungswerten, die mit jeder Klasse der Vielzahl von Klassen des lokalen Klassifizierungsmodells assoziiert sind, der bestimmten Klasse;
wobei der Satz von Entscheidungswerten, die mit jeder Klasse der Vielzahl von Klassen des lokalen Klassifizierungsmodells assoziiert sind, und/oder der erste Satz von Entscheidungswerten, die mit jeder Klasse der Vielzahl von Klassen des lokalen Klassifizierungsmodells assoziiert sind, unter Verwendung einer Support-Vector-Machine-Radialbasisfunktions(SVM-rbf)-Kernelfunktion bestimmt werden, die eine Eins-gegen-Alle-Entscheidungswerttechnik nutzt, und
wobei der zweite Satz von Entscheidungswerten, die mit jeder Klasse der Vielzahl von Klassen des lokalen Klassifizierungsmodells assoziiert sind, unter Verwendung einer SVM-Linear-Kernelfunktion bestimmt werden, die eine Alle-Paare-Entscheidungswerttechnik nutzt.

4. Verfahren gemäß einem der Ansprüche 1 bis 3, wobei das Bestimmen der Vorhersageschwelle, die mit der bestimmten Klasse assoziiert ist, Folgendes beinhaltet:
Bestimmen, dass eine erste Menge von Entscheidungswerten des ersten Satzes von Entscheidungswerten kleiner als eine bestimmte Entscheidungswertschwelle ist;
Bestimmen, dass eine zweite Menge von Entscheidungswerten des zweiten Satzes von Entscheidungswerten kleiner als die bestimmte Entscheidungswertschwelle ist;
Bestimmen, dass die erste Menge und die zweite Menge jeweils größer als oder gleich einer Mengenschwelle sind; und
Bestimmen der Vorhersageschwelle basierend auf mindestens einem von einem minimalen Entscheidungswert des zweiten Satzes von Entscheidungswerten oder einem maximalen Entscheidungswert des dritten Satzes von Entscheidungswerten.

5. Verfahren gemäß einem der Ansprüche 1 bis 4, wobei das Bestimmen der Vorhersageschwelle, die mit der bestimmten Klasse assoziiert ist, Folgendes beinhaltet:
Bestimmen eines ersten minimalen Entscheidungswerts des ersten Satzes von Entscheidungswerten;
Bestimmen eines zweiten minimalen Entscheidungswerts des zweiten Satzes von Entscheidungswerten;
und ferner Folgendes beinhaltet:
Bestimmen, dass mindestens einer des ersten minimalen Entscheidungswerts oder des zweiten minimalen Entscheidungswerts größer als oder gleich einer bestimmten Entscheidungswertschwelle ist, und
Bestimmen der Vorhersageschwelle basierend auf mindestens einem des zweiten minimalen Entscheidungswerts oder eines maximalen Entscheidungswerts des dritten Satzes von Entscheidungswerten; und/oder
Bestimmen, dass jeder des ersten minimalen Entscheidungswerts und des zweiten minimalen Entscheidungswerts kleiner als eine bestimmte Entscheidungswertschwelle ist; und
Bestimmen der Vorhersageschwelle basierend auf mindestens einem des ersten minimalen Entscheidungswerts oder des zweiten minimalen Entscheidungswerts.

6. Eine Vorrichtung zum spektroskopischen Klassifizieren von unbekannten Proben, die Folgendes beinhaltet:
einen oder mehrere Speicher; und
einen oder mehrere Prozessoren, die mit dem einen oder den mehreren Speichern gekoppelt sind und für Folgendes konfiguriert sind:
Erhalten einer spektroskopischen Messung, die mit einer Probe assoziiert ist;
Erzeugen eines globalen Klassifizierungsmodells unter Verwendung einer Support-Vector-Machine(SVM)-Technik, wobei die SVM-Technik eine Kernelfunktion verwendet, um die Ähnlichkeit zwischen zwei spektroskopischen Messungen zu bestimmen, wobei das globale Klassifizierungsmodell eine Vielzahl von Klassen beinhaltet und wobei jede Klasse einer Gruppierung von ähnlichen Materialien entspricht,
Erzeugen eines lokalen Klassifizierungsmodells durch Verarbeiten der spektroskopischen Messung und des globalen Klassifizierungsmodells und Auswählen eines Satzes von Klassen aus der Vielzahl von Klassen des globalen Klassifizierungsmodells basierend auf einer Vielzahl von Konfidenzmetriken,
wobei das lokale Klassifizierungsmodell ein lokales In-situ-Klassifizierungsmodell ist, das unter Verwendung der SVM-Technik und des Satzes von Klassen erzeugt wird;
und
Identifizieren, basierend auf der spektroskopischen Messung, einer bestimmten Klasse des Satzes von Klassen des lokalen Klassifizierungsmodells,
Identifizieren einer Vorhersageschwelle, die mit der bestimmten Klasse des Satzes von Klassen assoziiert ist, wobei die Vorhersageschwelle ein Toleranzbereich um eine Grenze der bestimmten Klasse ist;
wobei das Identifizieren der Vorhersageschwelle, die mit der bestimmten Klasse assoziiert ist, Folgendes beinhaltet:
Bestimmen eines ersten Satzes von Entscheidungswerten, die mit der bestimmten Klasse assoziiert sind;
Bestimmen eines zweiten Satzes von Entscheidungswerten, die mit der bestimmten Klasse assoziiert sind;
Bestimmen eines dritten Satzes von Entscheidungswerten, die mit mindestens einer anderen Klasse der Vielzahl von Klassen assoziiert sind; und
Bestimmen der Vorhersageschwelle, die mit der bestimmten Klasse assoziiert ist, basierend auf mindestens zwei des ersten Satzes von Entscheidungswerten, des zweiten Satzes von Entscheidungswerten oder des dritten Satzes von Entscheidungswerten unter Verwendung entweder eines ersten Vorhersageschemas oder eines zweiten Vorhersageschemas; wobei:
der erste Satz von Entscheidungswerten, die mit der bestimmten Klasse assoziiert sind, unter Verwendung einer Support-Vector-Machine-Radialbasisfunktions(SVM-rbf)-Kernelfunktion bestimmt wird, die eine Selbstvorhersagetechnik nutzt;
der zweite Satz von Entscheidungswerten, die mit der bestimmten Klasse assoziiert sind, unter Verwendung einer SVM-rbf-Kernelfunktion bestimmt wird, die eine Kreuzvalidierungstechnik nutzt; und
der dritte Satz von Entscheidungswerten, die mit der mindestens einen anderen Klasse assoziiert sind, unter Verwendung einer SVM-rbf-Kernelfunktion bestimmt wird, die eine Binärklassifikationstechnik nutzt; und
wobei das erste Vorhersageschema die Vorhersageschwelle basierend auf einem minimalen Entscheidungswert des zweiten Satzes von Entscheidungswerten und einem maximalen Entscheidungswert des dritten Satzes von Entscheidungswerten bestimmt; und
wobei das zweite Vorhersageschema die Vorhersageschwelle basierend auf dem ersten minimalen Entscheidungswert und/oder dem zweiten minimalen Entscheidungswert bestimmt;
wobei das zweite Vorhersageschema verwendet wird, wenn bestimmt wird, dass sowohl der erste minimale Entscheidungswert des ersten Satzes von Entscheidungswerten als auch der zweite minimale Entscheidungswert des zweiten Satzes von Entscheidungswerten kleiner als eine Entscheidungsschwelle sind;
Klassifizieren, basierend auf der bestimmten Klasse und der Vorhersageschwelle, der spektroskopischen Messung; und
Bereitstellen von Informationen, die angeben, ob die Probe zu der bestimmten Klasse gehört, basierend auf dem Klassifizieren der spektroskopischen Messung.

7. Vorrichtung gemäß Anspruch 6, wobei der eine oder die mehreren Prozessoren zum Identifizieren der bestimmten Klasse für Folgendes konfiguriert sind:
Bestimmen eines Satzes von Wahrscheinlichkeitswerten, die mit jeder Klasse der Vielzahl von Klassen des lokalen Klassifizierungsmodells assoziiert sind, wobei die Wahrscheinlichkeitswerte unter Verwendung einer Support-Vector-Machine-Radialbasisfunktions(SVM-rbf)-Kernelfunktion unter Verwendung einer Wahrscheinlichkeitswerttechnik bestimmt werden, um eine Klasse auszuwählen, die mit einem größten Wahrscheinlichkeitswert als die bestimmte Klasse assoziiert ist; und
Bestimmen, basierend auf dem Satz von Wahrscheinlichkeitswerten, die mit jeder Klasse der Vielzahl von Klassen des lokalen Klassifizierungsmodells assoziiert sind, der bestimmten Klasse; und/oder
Bestimmen eines Satzes von Entscheidungswerten, die mit jeder Klasse der Vielzahl von Klassen des lokalen Klassifizierungsmodells assoziiert sind;
Bestimmen, dass eine Schwellenmenge der Entscheidungswerte eines bestimmten Satzes von Entscheidungswerten jeweils kleiner als eine bestimmte Entscheidungswertschwelle ist; und
Bestimmen, basierend auf der Bestimmung, dass die Schwellenmenge der Entscheidungswerte des bestimmten Satzes von Entscheidungswerten jeweils kleiner als die bestimmte Entscheidungswertschwelle ist, eines Satzes von Wahrscheinlichkeitswerten, die mit jeder Klasse der Vielzahl von Klassen des lokalen Klassifizierungsmodells assoziiert sind; und
Bestimmen, basierend auf dem Satz von Wahrscheinlichkeitswerten, die mit jeder Klasse der Vielzahl von Klassen des lokalen Klassifizierungsmodells assoziiert sind, der bestimmten Klasse;
wobei der Satz von Entscheidungswerten, die mit jeder Klasse der Vielzahl von Klassen des lokalen Klassifizierungsmodells assoziiert sind, und/oder der erste Satz von Entscheidungswerten, die mit jeder Klasse der Vielzahl von Klassen des lokalen Klassifizierungsmodells assoziiert sind, unter Verwendung einer SVM-rbf-Kernelfunktion bestimmt werden, die eine Eins-gegen-Alle-Entscheidungswerttechnik nutzt, und
wobei der zweite Satz von Entscheidungswerten, die mit jeder Klasse der Vielzahl von Klassen des lokalen Klassifizierungsmodells assoziiert sind, unter Verwendung einer SVM-Linear-Kernelfunktion bestimmt werden, die eine Alle-Paare-Entscheidungswerttechnik nutzt.

8. Vorrichtung gemäß Anspruch 6 oder Anspruch 7, wobei der eine oder die mehreren Prozessoren zum Identifizieren der Vorhersageschwelle, die mit der bestimmten Klasse assoziiert ist, für Folgendes konfiguriert sind:
Bestimmen, dass eine erste Menge von Entscheidungswerten eines ersten Satzes von Entscheidungswerten, die mit der bestimmten Klasse assoziiert sind, kleiner als eine bestimmte Entscheidungswertschwelle ist;
Bestimmen, dass eine zweite Menge von Entscheidungswerten eines zweiten Satzes von Entscheidungswerten, die mit der bestimmten Klasse assoziiert sind, kleiner als die bestimmte Entscheidungswertschwelle ist;
Bestimmen, dass die erste Menge und die zweite Menge jeweils größer als oder gleich einer Mengenschwelle sind; und
Bestimmen, basierend auf dem Bestimmen, dass die erste Menge und die zweite Menge jeweils größer als oder gleich der Mengenschwelle sind, der Vorhersageschwelle basierend auf einem minimalen Entscheidungswert des zweiten Satzes von Entscheidungswerten.

9. Vorrichtung gemäß einem der Ansprüche 6 bis 8, wobei der eine oder die mehreren Prozessoren zum Identifizieren der Vorhersageschwelle, die mit der bestimmten Klasse assoziiert ist, für Folgendes konfiguriert sind:
Bestimmen eines ersten minimalen Entscheidungswerts eines ersten Satzes von Entscheidungswerten, die mit der bestimmten Klasse assoziiert sind;
Bestimmen eines zweiten minimalen Entscheidungswerts eines zweiten Satzes von Entscheidungswerten, die mit der bestimmten Klasse assoziiert sind;
wobei der eine oder die mehreren Prozessoren ferner für Folgendes konfiguriert sind:
Bestimmen, dass mindestens einer des ersten minimalen Entscheidungswerts oder des zweiten minimalen Entscheidungswerts größer als oder gleich einer bestimmten Entscheidungswertschwelle ist, und
Bestimmen, basierend auf dem Bestimmen, dass mindestens einer des ersten minimalen Entscheidungswerts oder des zweiten minimalen Entscheidungswerts größer als oder gleich der bestimmten Entscheidungswertschwelle ist, der Vorhersageschwelle basierend auf dem zweiten minimalen Entscheidungswert;
und/oder
Bestimmen, dass jeder des ersten minimalen Entscheidungswerts und des zweiten minimalen Entscheidungswerts kleiner als eine bestimmte Entscheidungswertschwelle ist; und
Bestimmen, basierend auf dem Bestimmen, dass jeder des ersten minimalen Entscheidungswerts und des zweiten minimalen Entscheidungswerts kleiner als die bestimmte Entscheidungswertschwelle ist, der Vorhersageschwelle basierend auf mindestens einem des ersten minimalen Entscheidungswerts oder des zweiten minimalen Entscheidungswerts.

10. Ein nichtflüchtiges computerlesbares Medium, das einen Satz von Anweisungen speichert, wobei der Satz von Anweisungen Folgendes beinhaltet:
eine oder mehrere Anweisungen, die bei Ausführung durch einen oder mehrere Prozessoren einer Vorrichtung die Vorrichtung zu Folgendem veranlassen:
Erhalten einer spektroskopischen Messung, die mit einer Probe assoziiert ist, Erzeugen eines globalen Klassifizierungsmodells unter Verwendung einer Support-Vector-Machine(SVM)-Technik, wobei die SVM-Technik eine Kernelfunktion verwendet, um die Ähnlichkeit zwischen zwei spektroskopischen Messungen zu bestimmen, wobei das globale Klassifizierungsmodell eine Vielzahl von Klassen beinhaltet und wobei jede Klasse einer Gruppierung von ähnlichen Materialien entspricht,
Erzeugen eines lokalen Klassifizierungsmodells durch Verarbeiten der spektroskopischen Messung und des globalen Klassifizierungsmodells und Auswählen eines Satzes von Klassen aus der Vielzahl von Klassen des globalen Klassifizierungsmodells basierend auf einer Vielzahl von Konfidenzmetriken;
wobei das lokale Klassifizierungsmodell ein lokales In-situ-Klassifizierungsmodell ist, das unter Verwendung der SVM-Technik und des Satzes von Klassen erzeugt wird;
und
Identifizieren, basierend auf der spektroskopischen Messung, einer bestimmten Klasse des Satzes von Klassen des lokalen Klassifizierungsmodells;
Identifizieren einer Vorhersageschwelle, die mit der bestimmten Klasse des Satzes von Klassen assoziiert ist, wobei die Vorhersageschwelle ein Toleranzbereich um eine Grenze der bestimmten Klasse ist;
wobei das Identifizieren der Vorhersageschwelle, die mit der bestimmten Klasse assoziiert ist, Folgendes beinhaltet:
Bestimmen eines ersten Satzes von Entscheidungswerten, die mit der bestimmten Klasse assoziiert sind;
Bestimmen eines zweiten Satzes von Entscheidungswerten, die mit der bestimmten Klasse assoziiert sind;
Bestimmen eines dritten Satzes von Entscheidungswerten, die mit mindestens einer anderen Klasse der Vielzahl von Klassen assoziiert sind; und
Bestimmen der Vorhersageschwelle, die mit der bestimmten Klasse assoziiert ist, basierend auf mindestens zwei des ersten Satzes von Entscheidungswerten, des zweiten Satzes von Entscheidungswerten oder des dritten Satzes von Entscheidungswerten unter Verwendung entweder eines ersten Vorhersageschemas oder eines zweiten Vorhersageschemas; wobei:
der erste Satz von Entscheidungswerten, die mit der bestimmten Klasse assoziiert sind, unter Verwendung einer Support-Vector-Machine-Radialbasisfunktions(SVM-rbf)-Kernelfunktion bestimmt wird, die eine Selbstvorhersagetechnik nutzt;
der zweite Satz von Entscheidungswerten, die mit der bestimmten Klasse assoziiert sind, unter Verwendung einer SVM-rbf-Kernelfunktion bestimmt wird, die eine Kreuzvalidierungstechnik nutzt; und
der dritte Satz von Entscheidungswerten, die mit der mindestens einen anderen Klasse assoziiert sind, unter Verwendung einer SVM-rbf-Kernelfunktion bestimmt wird, die eine Binärklassifikationstechnik nutzt; und
wobei das erste Vorhersageschema die Vorhersageschwelle basierend auf einem minimalen Entscheidungswert des zweiten Satzes von Entscheidungswerten und einem maximalen Entscheidungswert des dritten Satzes von Entscheidungswerten bestimmt; und
wobei das zweite Vorhersageschema die Vorhersageschwelle basierend auf dem ersten minimalen Entscheidungswert und/oder dem zweiten minimalen Entscheidungswert bestimmt;
wobei das zweite Vorhersageschema verwendet wird, wenn bestimmt wird, dass sowohl der erste minimale Entscheidungswert des ersten Satzes von Entscheidungswerten als auch der zweite minimale Entscheidungswert des zweiten Satzes von Entscheidungswerten kleiner als eine Entscheidungsschwelle sind;
Klassifizieren, basierend auf der bestimmten Klasse und der Vorhersageschwelle, der spektroskopischen Messung; und
Bereitstellen von Informationen, die angeben, ob die Probe zu der bestimmten Klasse gehört, basierend auf dem Klassifizieren der spektroskopischen Messung.

## Revendications

1. Un procédé destiné à la classification spectroscopique d'échantillons inconnus, comprenant le fait :
d'obtenir, par un dispositif, une mesure spectroscopique associée à un échantillon ;
de générer, par un dispositif, un modèle de classification global en utilisant une technique de machine à vecteurs de support (SVM), dans lequel la technique SVM utilise une fonction noyau pour déterminer la similarité entre deux mesures spectroscopiques, dans lequel le modèle de classification global comprend une pluralité de classes, et dans lequel chaque classe correspond à un regroupement de matériaux similaires ;
de générer, par le dispositif, un modèle de classification local en traitant la mesure spectroscopique et le modèle de classification global et en sélectionnant un ensemble de classes, de la pluralité de classes du modèle de classification global, sur la base d'une pluralité de métriques de confiance ;
dans lequel le modèle de classification local est un modèle de classification local *in situ* généré en utilisant la technique SVM et l'ensemble de classes ;
d'identifier, par le dispositif et sur la base de la mesure spectroscopique, une classe particulière de l'ensemble de classes du modèle de classification local ;
d'identifier, par le dispositif, un seuil de prédiction associé à la classe particulière, dans lequel le seuil de prédiction est une zone de tolérance autour d'une frontière de la classe particulière ;
dans lequel identifier le seuil de prédiction associé à la classe particulière comprend le fait :
de déterminer un premier ensemble de valeurs de décision associées à la classe particulière ;
de déterminer un deuxième ensemble de valeurs de décision associées à la classe particulière ;
de déterminer un troisième ensemble de valeurs de décision associées à au moins une autre classe de la pluralité de classes ; et
de déterminer le seuil de prédiction associé à la classe particulière sur la base d'au moins deux ensembles parmi le premier ensemble de valeurs de décision, le deuxième ensemble de valeurs de décision, ou le troisième ensemble de valeurs de décision en utilisant soit un premier schéma de prédiction, soit un deuxième schéma de prédiction ;
dans lequel :
le premier ensemble de valeurs de décision associées à la classe particulière sont déterminées en utilisant une fonction noyau à fonction de base radiale de machine à vecteurs de support (SVM-rbf) qui emploie une technique d'auto-prédiction ;
le deuxième ensemble de valeurs de décision associées à la classe particulière sont déterminées en utilisant une fonction noyau SVM-rbf qui emploie une technique de validation croisée ; et
le troisième ensemble de valeurs de décision associées à l'au moins une autre classe sont déterminées en utilisant une fonction noyau SVM-rbf qui emploie une technique de classification binaire ; et
dans lequel le premier schéma de prédiction détermine le seuil de prédiction sur la base d'une valeur de décision minimale du deuxième ensemble de valeurs de décision et d'une valeur de décision maximale du troisième ensemble de valeurs de décision ; et
dans lequel le deuxième schéma de prédiction détermine le seuil de prédiction sur la base de la première valeur de décision minimale et/ou de la deuxième valeur de décision minimale ;
dans lequel le deuxième schéma de prédiction est utilisé lorsqu'il est déterminé que la première valeur de décision minimale du premier ensemble de valeurs de décision et la deuxième valeur de décision minimale du deuxième ensemble de valeurs de décision sont toutes deux inférieures à un seuil de décision ;
de classifier, par le dispositif et sur la base de la classe particulière et du seuil de prédiction, la mesure spectroscopique ; et
de fournir, par le dispositif et sur la base de la classification de la mesure spectroscopique, des informations indiquant si l'échantillon appartient à la classe particulière.

2. Le procédé de la revendication 1, dans lequel identifier la classe particulière comprend le fait :
de déterminer qu'une quantité seuil de valeurs de décision d'un ensemble particulier de valeurs de décision sont chacune inférieures à un seuil de valeur de décision particulier ;
de déterminer, sur la base du fait de déterminer que la quantité seuil de valeurs de décision de l'ensemble particulier de valeurs de décision sont chacune inférieures au seuil de valeur de décision particulier, un ensemble de valeurs de probabilité associées à chaque classe de la pluralité de classes du modèle de classification local, dans lequel les valeurs de probabilité sont déterminées en utilisant une fonction noyau à fonction de base radiale de machine à vecteurs de support (SVM-rbf) en utilisant une technique de valeur de probabilité pour sélectionner une classe associée à une valeur de probabilité la plus grande comme classe particulière ; et
de déterminer, sur la base de l'ensemble de valeurs de probabilité associées à chaque classe de la pluralité de classes du modèle de classification local, la classe particulière ;
dans lequel l'ensemble de valeurs de décision associées à chaque classe de la pluralité de classes du modèle de classification local et/ou le premier ensemble de valeurs de décision associées à chaque classe de la pluralité de classes du modèle de classification local sont déterminées en utilisant une fonction noyau SVM-rbf qui emploie une technique de valeur de décision un contre tous, et
dans lequel le deuxième ensemble de valeurs de décision associées à chaque classe de la pluralité de classes du modèle de classification local sont déterminées en utilisant une fonction noyau linéaire SVM qui emploie une technique de valeur de décision toutes paires.

3. Le procédé de la revendication 1 ou de la revendication 2, dans lequel identifier la classe particulière comprend le fait :
de déterminer un premier ensemble de valeurs de décision associées à chaque classe de la pluralité de classes du modèle de classification local ;
de déterminer qu'une quantité seuil de valeurs de décision de chaque valeur du premier ensemble de valeurs de décision sont chacune supérieures ou égales à un seuil de valeur de décision particulier ;
de déterminer, sur la base de la détermination que la quantité seuil des valeurs de décision de chaque valeur du premier ensemble de valeurs de décision sont chacune supérieures ou égales au seuil de valeur de décision particulier, un deuxième ensemble de valeurs de décision associées à chaque classe de la pluralité de classes du modèle de classification local ; et
de déterminer, sur la base du deuxième ensemble de valeurs de décision associées à chaque classe de la pluralité de classes du modèle de classification local, la classe particulière ;
dans lequel l'ensemble de valeurs de décision associées à chaque classe de la pluralité de classes du modèle de classification local et/ou le premier ensemble de valeurs de décision associées à chaque classe de la pluralité de classes du modèle de classification local sont déterminées en utilisant une fonction noyau à fonction de base radiale de machine à vecteurs de support (SVM-rbf) qui emploie une technique de valeur de décision un contre tous, et
dans lequel le deuxième ensemble de valeurs de décision associées à chaque classe de la pluralité de classes du modèle de classification local sont déterminées en utilisant une fonction noyau linéaire SVM qui emploie une technique de valeur de décision toutes paires.

4. Le procédé de n'importe lesquelles des revendications 1 à 3, dans lequel le fait de déterminer le seuil de prédiction associé à la classe particulière comprend le fait :
de déterminer qu'une première quantité de valeurs de décision du premier ensemble de valeurs de décision sont inférieures à un seuil de valeur de décision particulier ;
de déterminer qu'une deuxième quantité de valeurs de décision du deuxième ensemble de valeurs de décision sont inférieures au seuil de valeur de décision particulier ;
de déterminer que la première quantité et la deuxième quantité sont chacune supérieures ou égales à un seuil de quantité ; et
de déterminer le seuil de prédiction sur la base d'au moins une valeur de décision minimale du deuxième ensemble de valeurs de décision ou d'une valeur de décision maximale du troisième ensemble de valeurs de décision.

5. Le procédé de n'importe lesquelles des revendications 1 à 4, dans lequel le fait de déterminer le seuil de prédiction associé à la classe particulière comprend le fait :
de déterminer une première valeur de décision minimale du premier ensemble de valeurs de décision ;
de déterminer une deuxième valeur de décision minimale du deuxième ensemble de valeurs de décision ;
et comprend en outre le fait :
de déterminer qu'au moins une valeur parmi la première valeur de décision minimale ou la deuxième valeur de décision minimale est supérieure ou égale à un seuil de valeur de décision particulier, et
de déterminer le seuil de prédiction sur la base d'au moins une valeur parmi la deuxième valeur de décision minimale ou une valeur de décision maximale du troisième ensemble de valeurs de décision ; et/ou
de déterminer que chaque valeur parmi la première valeur de décision minimale et la deuxième valeur de décision minimale est inférieure à un seuil de valeur de décision particulier ; et
de déterminer le seuil de prédiction sur la base d'au moins une valeur parmi la première valeur de décision minimale ou la deuxième valeur de décision minimale.

6. Un dispositif destiné à la classification spectroscopique d'échantillons inconnus, comprenant :
une ou plusieurs mémoires ; et
un ou plusieurs processeurs, couplés aux une ou plusieurs mémoires, configurés pour :
obtenir une mesure spectroscopique associée à un échantillon ;
générer un modèle de classification global en utilisant une technique de machine à vecteurs de support (SVM), dans lequel la technique SVM utilise une fonction noyau pour déterminer la similarité entre deux mesures spectroscopiques, dans lequel le modèle de classification global comprend une pluralité de classes, et dans lequel chaque classe correspond à un regroupement de matériaux similaires,
générer un modèle de classification local en traitant la mesure spectroscopique et le modèle de classification global et sélectionner un ensemble de classes, de la pluralité de classes du modèle de classification global, sur la base d'une pluralité de métriques de confiance,
dans lequel le modèle de classification local est un modèle de classification local *in situ* généré en utilisant la technique SVM et l'ensemble de classes ; et
identifier, sur la base de la mesure spectroscopique, une classe particulière de l'ensemble de classes du modèle de classification local,
identifier un seuil de prédiction associé à la classe particulière de l'ensemble de classes, dans lequel le seuil de prédiction est une zone de tolérance autour d'une frontière de la classe particulière ;
dans lequel le fait d'identifier le seuil de prédiction associé à la classe particulière comprend le fait :
de déterminer un premier ensemble de valeurs de décision associées à la classe particulière ;
de déterminer un deuxième ensemble de valeurs de décision associées à la classe particulière ;
de déterminer un troisième ensemble de valeurs de décision associées à au moins une autre classe parmi la pluralité de classes ; et
de déterminer le seuil de prédiction associé à la classe particulière sur la base d'au moins deux ensembles parmi le premier ensemble de valeurs de décision, le deuxième ensemble de valeurs de décision, ou le troisième ensemble de valeurs de décision en utilisant soit un premier schéma de prédiction, soit un deuxième schéma de prédiction ; dans lequel :
le premier ensemble de valeurs de décision associées à la classe particulière sont déterminées en utilisant une fonction noyau à fonction de base radiale de machine à vecteurs de support (SVM-rbf) qui emploie une technique d'auto-prédiction ;
le deuxième ensemble de valeurs de décision associées à la classe particulière sont déterminées en utilisant une fonction noyau SVM-rbf qui emploie une technique de validation croisée ; et
le troisième ensemble de valeurs de décision associées à l'au moins une autre classe sont déterminées en utilisant une fonction noyau SVM-rbf qui emploie une technique de classification binaire ; et
dans lequel le premier schéma de prédiction détermine le seuil de prédiction sur la base d'une valeur de décision minimale du deuxième ensemble de valeurs de décision et d'une valeur de décision maximale du troisième ensemble de valeurs de décision ; et
dans lequel le deuxième schéma de prédiction détermine le seuil de prédiction sur la base de la première valeur de décision minimale et/ou de la deuxième valeur de décision minimale ;
dans lequel le deuxième schéma de prédiction est utilisé lorsqu'il est déterminé que la première valeur de décision minimale du premier ensemble de valeurs de décision et la deuxième valeur de décision minimale du deuxième ensemble de valeurs de décision sont toutes deux inférieures à un seuil de décision ;
classifier, sur la base de la classe particulière et du seuil de prédiction, la mesure spectroscopique ; et
fournir des informations indiquant si l'échantillon appartient à la classe particulière sur la base du fait de classifier la mesure spectroscopique.

7. Le dispositif de la revendication 6, dans lequel les un ou plusieurs processeurs, pour identifier la classe particulière, sont configurés pour :
déterminer un ensemble de valeurs de probabilité associées à chaque classe de la pluralité de classes du modèle de classification local, dans lequel les valeurs de probabilité sont déterminées en utilisant une fonction noyau à fonction de base radiale de machine à vecteurs de support (SVM-rbf) en utilisant une technique de valeur de probabilité pour sélectionner une classe associée à une valeur de probabilité la plus grande comme classe particulière ; et
déterminer, sur la base de l'ensemble de valeurs de probabilité associées à chaque classe de la pluralité de classes du modèle de classification local, la classe particulière ;
et/ou
déterminer un ensemble de valeurs de décision associées à chaque classe de la pluralité de classes du modèle de classification local ;
déterminer qu'une quantité seuil des valeurs de décision d'un ensemble particulier de valeurs de décision sont chacune inférieures à un seuil de valeur de décision particulier ; et
déterminer, sur la base de la détermination que la quantité seuil des valeurs de décision de l'ensemble particulier de valeurs de décision sont chacune inférieures au seuil de valeur de décision particulier, un ensemble de valeurs de probabilité associées à chaque classe de la pluralité de classes du modèle de classification local ; et
déterminer, sur la base de l'ensemble de valeurs de probabilité associées à chaque classe de la pluralité de classes du modèle de classification local, la classe particulière ;
dans lequel l'ensemble de valeurs de décision associées à chaque classe de la pluralité de classes du modèle de classification local et/ou le premier ensemble de valeurs de décision associées à chaque classe de la pluralité de classes du modèle de classification local sont déterminées en utilisant une fonction noyau SVM-rbf qui emploie une technique de valeur de décision un contre tous, et
dans lequel le deuxième ensemble de valeurs de décision associées à chaque classe de la pluralité de classes du modèle de classification local sont déterminées en utilisant une fonction noyau linéaire SVM qui emploie une technique de valeur de décision toutes paires.

8. Le dispositif de la revendication 6 ou de la revendication 7, dans lequel les un ou plusieurs processeurs, pour identifier le seuil de prédiction associé à la classe particulière, sont configurés pour :
déterminer qu'une première quantité de valeurs de décision d'un premier ensemble de valeurs de décision associées à la classe particulière sont inférieures à un seuil de valeur de décision particulier ;
déterminer qu'une deuxième quantité de valeurs de décision d'un deuxième ensemble de valeurs de décision associées à la classe particulière sont inférieures au seuil de valeur de décision particulier ;
déterminer que la première quantité et la deuxième quantité sont chacune supérieures ou égales à un seuil de quantité ; et
déterminer, sur la base du fait de déterminer que la première quantité et la deuxième quantité sont chacune supérieures ou égales au seuil de quantité, le seuil de prédiction sur la base d'une valeur de décision minimale du deuxième ensemble de valeurs de décision.

9. Le dispositif de n'importe lesquelles des revendications 6 à 8, dans lequel les un ou plusieurs processeurs, pour identifier le seuil de prédiction associé à la classe particulière, sont configurés pour :
déterminer une première valeur de décision minimale d'un premier ensemble de valeurs de décision associées à la classe particulière ;
déterminer une deuxième valeur de décision minimale d'un deuxième ensemble de valeurs de décision associées à la classe particulière ;
dans lequel les un ou plusieurs processeurs sont configurés en outre pour :
déterminer qu'au moins une valeur parmi la première valeur de décision minimale ou la deuxième valeur de décision minimale est supérieure ou égale à un seuil de valeur de décision particulier, et
déterminer, sur la base du fait de déterminer qu'au moins une valeur parmi la première valeur de décision minimale ou la deuxième valeur de décision minimale est supérieure ou égale au seuil de valeur de décision particulier, le seuil de prédiction sur la base de la deuxième valeur de décision minimale ; et/ou
déterminer que chaque valeur parmi la première valeur de décision minimale et la deuxième valeur de décision minimale est inférieure à un seuil de valeur de décision particulier ; et
déterminer, sur la base du fait de déterminer que chaque valeur parmi la première valeur de décision minimale et la deuxième valeur de décision minimale est inférieure au seuil de valeur de décision particulier, le seuil de prédiction sur la base d'au moins une valeur parmi la première valeur de décision minimale ou la deuxième valeur de décision minimale.

10. Un support lisible par ordinateur non transitoire stockant un ensemble d'instructions, l'ensemble d'instructions comprenant :
une ou plusieurs instructions qui, lorsqu'elles sont exécutées par un ou plusieurs processeurs d'un dispositif, amènent le dispositif à :
obtenir une mesure spectroscopique associée à un échantillon,
générer un modèle de classification global en utilisant une technique de machine à vecteurs de support (SVM), dans lequel la technique SVM utilise une fonction noyau pour déterminer la similarité entre deux mesures spectroscopiques, dans lequel le modèle de classification global comprend une pluralité de classes, et
dans lequel chaque classe correspond à un regroupement de matériaux similaires,
générer un modèle de classification local en traitant la mesure spectroscopique et le modèle de classification global et sélectionner un ensemble de classes, de la pluralité de classes du modèle de classification global, sur la base d'une pluralité de métriques de confiance ;
dans lequel le modèle de classification local est un modèle de classification local *in situ* généré en utilisant la technique SVM et l'ensemble de classes ; et
identifier, sur la base de la mesure spectroscopique, une classe particulière de l'ensemble de classes du modèle de classification local ;
identifier un seuil de prédiction associé à la classe particulière de l'ensemble de classes, dans lequel le seuil de prédiction est une zone de tolérance autour d'une frontière de la classe particulière ;
dans lequel le fait d'identifier le seuil de prédiction associé à la classe particulière comprend le fait :
de déterminer un premier ensemble de valeurs de décision associées à la classe particulière ;
de déterminer un deuxième ensemble de valeurs de décision associées à la classe particulière ;
de déterminer un troisième ensemble de valeurs de décision associées à au moins une autre classe de la pluralité de classes ; et
de déterminer le seuil de prédiction associé à la classe particulière sur la base d'au moins deux ensembles parmi le premier ensemble de valeurs de décision, le deuxième ensemble de valeurs de décision, ou le troisième ensemble de valeurs de décision en utilisant soit un premier schéma de prédiction, soit un deuxième schéma de prédiction ; dans lequel :
le premier ensemble de valeurs de décision associées à la classe particulière sont déterminées en utilisant une fonction noyau à fonction de base radiale de machine à vecteurs de support (SVM-rbf) qui emploie une technique d'auto-prédiction ;
le deuxième ensemble de valeurs de décision associées à la classe particulière sont déterminées en utilisant une fonction noyau SVM-rbf qui emploie une technique de validation croisée ; et
le troisième ensemble de valeurs de décision associées à l'au moins une autre classe sont déterminées en utilisant une fonction noyau SVM-rbf qui emploie une technique de classification binaire ; et
dans lequel le premier schéma de prédiction détermine le seuil de prédiction sur la base d'une valeur de décision minimale du deuxième ensemble de valeurs de décision et d'une valeur de décision maximale du troisième ensemble de valeurs de décision ; et
dans lequel le deuxième schéma de prédiction détermine le seuil de prédiction sur la base de la première valeur de décision minimale et/ou de la deuxième valeur de décision minimale ;
dans lequel le deuxième schéma de prédiction est utilisé lorsqu'il est déterminé que la première valeur de décision minimale du premier ensemble de valeurs de décision et la deuxième valeur de décision minimale du deuxième ensemble de valeurs de décision sont toutes deux inférieures à un seuil de décision ;
classifier, sur la base de la classe particulière et du seuil de prédiction, la mesure spectroscopique ; et
fournir des informations indiquant si l'échantillon appartient à la classe particulière sur la base du fait de classifier la mesure spectroscopique.
